# EUROPEAN PATENT APPLICATION

(11) **EP 4 525 122 A1**
(43) Date of publication of application: **19.03.2025**
(21) Application number: 24796983.5
(22) Date of filing: 23.04.2024
(51) Int. Cl.: H01M 10/0567, C07F 1/02, C07F 19/00, H01G 11/62, H01G 11/64, H01G 11/84, H01M 10/052, H01M 10/0568

(54) **ELECTROLYTE FOR POWER STORAGE DEVICE, REINFORCING AGENT, ELECTROLYTE SOLUTION, AND POWER STORAGE DEVICE USING SAME**

(30) Priority: 27.04.2023 JP 2023073155
(71) Applicant: Tomiyama Pure Chemical Industries, Limited, Tokyo 103-0023 (JP)
(72) Inventor: NING Tailu, Kamisu-shi, Ibaraki 314-0255 (JP); TOSHIMA Yasuharu, Kamisu-shi, Ibaraki 314-0255 (JP); SHIMIZU Kazuyuki, Kamisu-shi, Ibaraki 314-0255 (JP); NITTA Hiroo, Kamisu-shi, Ibaraki 314-0255 (JP)
(74) Representative: Müller-Boré & Partner Patentanwälte PartG mbB
(86) International application number: PCT/JP2024/015804
(87) International publication number: WO 2024/225237

(57) **Abstract**

The present invention addresses the problem of providing: an electrolyte that can be used to produce a power storage device and has an excellent balance between solubility in organic solvents (non-aqueous solvents), charge/discharge efficiency, -10°C resistance value, cycle characteristics (volume change rate, capacity retention rate, resistance change rate), and high-temperature characteristics; a reinforcing agent; an electrolyte solution; a power storage device produced using the same; and a method for producing a lithium boron fluoride complex compound and a lithium complex compound for an electrolyte or a reinforcing agent. This electrolyte for a power storage device contains a lithium boron fluoride complex compound having a specific substituent.

## Description

### Technical Field

The present invention relates to an electrolyte, a reinforcing agent, and an electrolytic solution for power storage device, and a power storage device produced by using thereof, and further relates to a production method thereof.

### Background Art

With the spread of various electronic devices in recent years, such as portable electronic terminals including smartphones and notebook computers, as well as hybrid cars and electric cars, secondary batteries have played an important role as power sources for them. Examples of these secondary batteries include aqueous or nonaqueous electrolytic solution batteries, and furthermore, all-solid-state batteries. Among them, a lithium-ion secondary battery including a nonaqueous electrolytic solution, which has positive and negative electrodes capable of absorbing and releasing lithium ions and the like and the nonaqueous electrolytic solution, has a high energy density at high voltages, excellent safety, and various advantages over other secondary batteries in terms of environmental issues, etc.

In a lithium-ion secondary battery including a nonaqueous electrolytic solution that has been currently practically used, for example, a composite oxide of lithium and a transition metal is used as the positive electrode active material, and a material that can be doped with and dedoped from lithium is used as the negative electrode active material. There is a demand for improving the characteristics of the nonaqueous electrolytic solution transporting lithium ions in order to improve performance.

As such a nonaqueous electrolytic solution, an electrolytic solution has been used that includes an aprotic organic solvent and an electrolyte, such as LiBF₄, LiPF₆, LiClO₄, LiN(SO₂CF₃)₂, or LiN(SO₂CF₂CF₃)₂, dissolved therein.

Such a nonaqueous electrolytic solution including an electrolyte, such as LiBF₄ or LiPF₆, dissolved is known to have high conductivity that indicates the transport of lithium ions, and is known to provide a stable high voltage because of a high oxidative decomposition voltage of LiBF₄, LiPF₆, contributing to resulting in characteristics such as high voltage and high energy density of the lithium secondary batteries.

However, there is a demand for improvements of the nonaqueous electrolytic solutions for such lithium secondary batteries, such as an increase in the conductivity of lithium ions to lower electrical resistance, improvement of so-called cycle characteristics that maintain high capacity even after charge and discharge are repeated, low resistance characteristics at the initial stage, and retention of high characteristics at high temperatures.

In order to achieve these objectives, various improvements have been proposed for the electrolyte contained in the nonaqueous electrolytic solution, and novel materials have also been proposed for the materials themselves.

Furthermore, lithium-ion secondary batteries, which includes an aqueous electrolytic solution free of concerns about firing of batteries due to the flammability of organic solvents in a nonaqueous electrolytic solution, and also all-solid-state lithium batteries have been developed. Various improvements have been proposed for the solid electrolytes used therefor, and novel materials have also been proposed for the materials themselves.

For example, Patent Literature 1 proposes a nonaqueous electrolytic solution containing a complex compound represented by the following General Formula as an electrolyte. Patent Literature 1 discloses that this makes it possible to improve resistance characteristics of a power storage device at the initial stage.

X-(O-A(Z)-O-B⁻(Y)(F)M⁺-)ₙ-R

wherein X, Y, Z, and R represent, for example, an alkyl group, A represents, for example, P=O, and M represents an alkali metal.

Patent Literature 2 proposes a nonaqueous electrolytic solution that contains, as an electrolyte, a complex compound having a partial structure represented by the General Formula: M⁺PO₃(F)A⁻, wherein M⁺ is a monovalent metal, and A is a boron atom or a phosphorus atom. Patent Literature 2 discloses that this makes it possible to improve charge storage characteristics of a power storage device at high temperatures, particularly to prevent an increase in resistance at the time of storage.

Patent Literature 3 discloses electrolytes for power storage devices that contain lithium-containing complex compounds, each of which is represented by each Formula described below.

(Li)ₘ(A)ₙ(UFₓ)_{y}

(Li)ₘ(Si)ₙ(O)_{q}(UFₓ)_{y}

wherein A is O, S, P, or N, U is B or P, m and n are 1 to 6, q is 1 to 12, x is 3 or 5, and y is 1 to 6;

   (Li)ₘ(O)ₙ(B)ₚ(OWF_{q})ₓ
wherein W is B or P, m, p, and x are 1 to 15, n is 0 to 15, and q is 3 or 5.

   (Li)ₘ(B)ₚ(O)ₙ(OR)_{y}(OWF_{q})ₓ
wherein W is B or P, n is 0 to 15, p, m, x, and y are 1 to 12, q is 3 or 5, and R is hydrogen, an alkyl group, or the like.

   (Li)ₘ(O)ₙ(B)ₚ(OOC-(A)_{z}-COO)_{y}(OWF_{q})ₓ
wherein W is B or P, A is an alkylene group having 1 to 6 carbon atoms, m, p, x, and y are 1 to 20, n is 0 to 15, z is 0 or 1, and q is 3 or 5.

It is disclosed that such an electrolyte can provide a nonaqueous electrolytic solution with a low electrical resistance, can provide a power storage device such as a lithium-ion secondary battery having good initial characteristics and excellent cycle characteristics, and can provide an all-solid-state lithium secondary battery because the electrolyte itself has excellent conductivity of lithium ions.

However, sufficient improvements, or new electrolytes or the like have not been obtained.

### Citation List

### Patent Literature

Patent Literature 1
   International publication No. WO2014/175225
Patent Literature 2
   Japanese Patent Laid-Open No. 2020-194771
Patent Literature 3
   International publication No. WO2019/180945

### Summary of Invention

### Technical Problem

An object of the present invention is to provide an electrolyte, a reinforcing agent and an electrolytic solution that is excellent in solubility to an organic solvent (nonaqueous solvent), and that can provide a power storage device being excellent in charge-discharge efficiency, a resistance value at -10 C, cycle characteristics (change in volume, capacity retention ratio, change in resistance) and balance of high-temperature characteristics; and to provide a power storage device produced by using them; as well as to provide methods for producing a lithium·boron fluoride complex compound and a lithium complex compound for the above electrolyte or reinforcing agent.

### Solution to Problem

In order to solve the above problems, the present inventors have found a novel electrolyte for power storage device, the electrolyte including a specific complex compound, and completed the present invention based on this.

Specifically, the present invention is characterized by the following.
1. An electrolyte for power storage device, comprising a complex compound (A),
   wherein the complex compound (A) comprises one or more compounds represented by Formula (1) below: 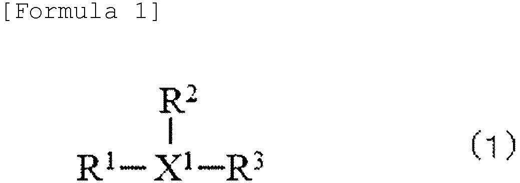
   wherein X¹ is a P(=O) group or a P(=S) group,
   R¹ to R³ are each independently a group selected from the group consisting of a hydrogen atom, an alkyl group, an alkenyl group, a halogen atom, an alkoxy group, a siloxy group, a thiosilane group, and a group represented by Formula (2) below; or one of two groups selected from the group consisting of R¹ to R³ is an oxygen atom and is linked to the other group to form a ring structure, and
   at least one of R¹ to R³ is a group containing a structure represented by Formula (2) below: 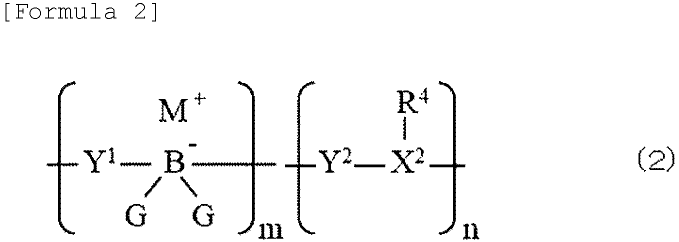
   wherein the Formula (2) represents an oligomer having a molecular structure that includes a structure in which respective repeating units represented in brackets are linked to each other, and a linkage order of the repeating units is arbitrary,
   m represents a repeating number of the repeating unit put in [ ]ₘ, and is a number of 1 to 10,
   n represents a repeating number of the repeating unit put in [ ]ₙ, and is a number of 0 to 10,
   M⁺ is an alkali metal cation or a quaternary ammonium cation,
   Y¹ and Y² are each independently an oxygen atom or a sulfur atom,
   B is a boron atom,
   G is a halogen atom,
   X² is a P(=O) group or a P(=S) group, and
   R⁴ is each independently a group selected from the group consisting of a hydrogen atom, an alkyl group, an alkenyl group, a halogen atom, an alkoxy group, a siloxy group, a thiosilane group, and the group put in [ ]ₘ.
2. The electrolyte according to 1, wherein the complex compound (A) includes one or more boron halide groups.
3. The electrolyte according to 1, wherein the complex compound (A) includes one or more siloxy groups and/or thiosilane groups.
4. The electrolyte according to 1, wherein the complex compound (A) includes:
   one or more boron halide groups; and
   one or more siloxy groups and/or thiosilane groups.
5. The electrolyte according to 1,
   wherein the complex compound (A) includes one or more selected from the group consisting of complex compounds represented by Formulas (3) to (16) below. 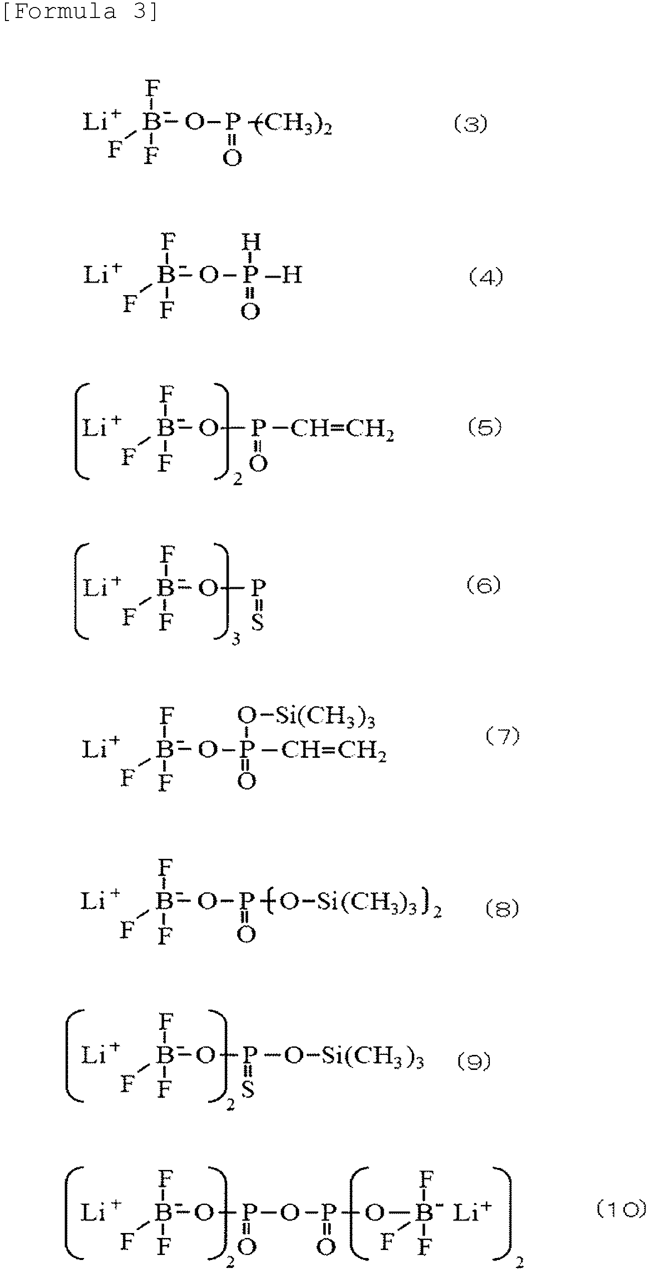 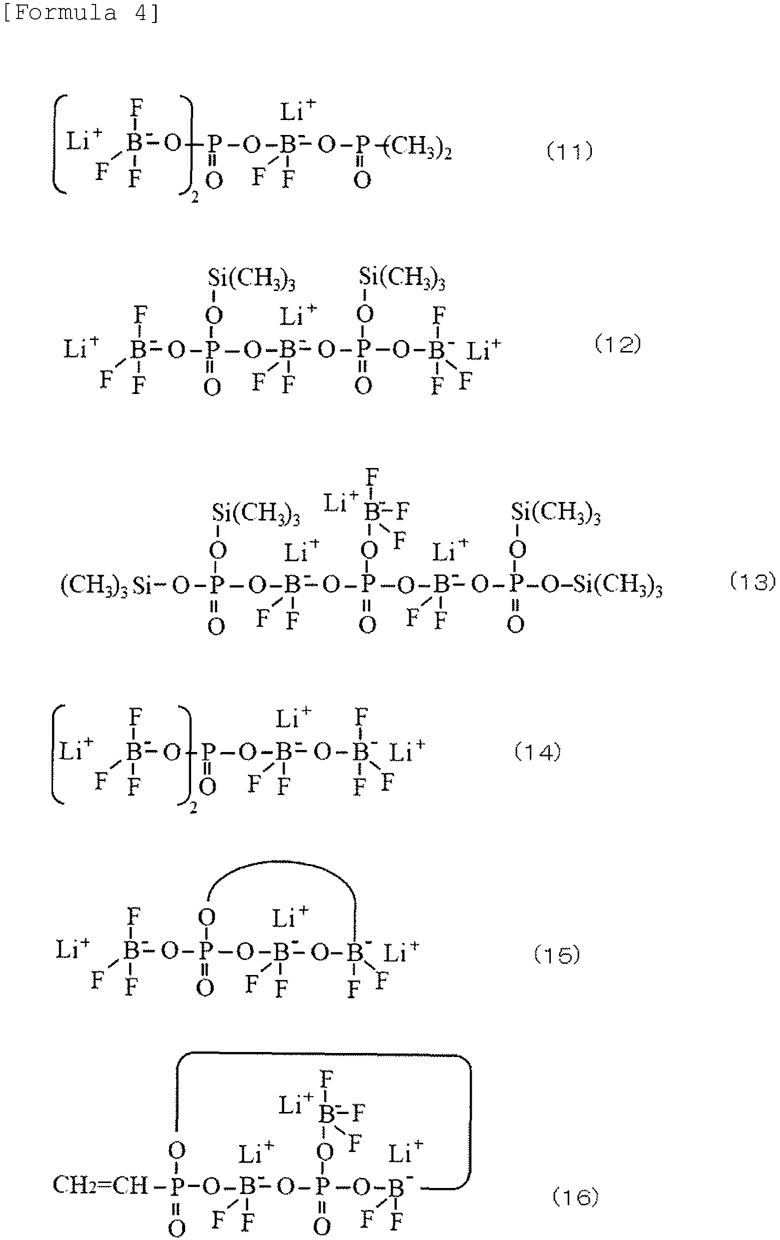
6. A reinforcing agent for power storage device, comprising the complex compound (A) defined in any one of 1 to 5.
7. An electrolytic solution for power storage device, comprising at least:
   the complex compound (A) defined in any one of 1 to 5; and
   an organic solvent,
   wherein a concentration of an alkali metal cation or a quaternary ammonium cation derived from the complex compound (A) in the whole electrolytic solution is 0.01 mol/L or more and 2.0 mol/L or less.
8. An electrolytic solution for power storage device, comprising at least:
   the complex compound (A) defined in any one of 1 to 5; and
   an organic solvent,
   wherein a concentration of the complex compound (A) in the whole electrolytic solution is 0.1% by mass or more and 30% by mass or less.
9. A power storage device produced by using the electrolytic solution according to 7 or 8.
10. A power storage device produced by using the electrolyte according to any one of 1 to 5 and/or the reinforcing agent according to 6.
11. A solid-type power storage device produced by using the electrolyte according to any one of 1 to 5 and/or the reinforcing agent according to 6.
12. A method for producing the complex compound (A) defined in any one of 1 to 5, comprising
   reacting a boron halide compound (B) with a phosphorous salt (C) to synthesize a complex compound (A),
   wherein the boron halide compound (B) is a compound containing a boron halide group, and
   the phosphorous salt (C) is a compound represented by Formula (17) below: 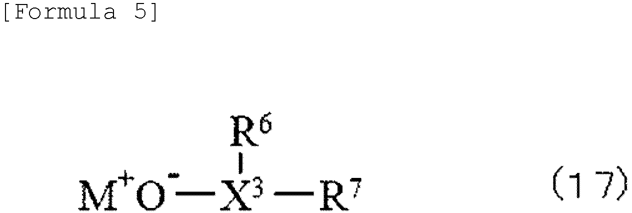
   wherein M⁺ is an alkali metal cation or a quaternary ammonium cation, X³ is a P(=O) group or a P(=S) group, and R⁶ and R⁷ are each independently a group selected from the group consisting of a hydrogen atom, a hydroxyl group, an alkyl group, an alkenyl group, an alkoxy group, a siloxy group, a thiosilane group, -O⁻M⁺, and -S⁻M⁺.
13. A method for producing the complex compound (A) defined in any one of 1 to 5, comprising:
   a step 1 of allowing binding reaction between a boron halide-based salt (E) and a phosphorus compound (F) by elimination of halogenated silyl to proceed,
   wherein the boron halide-based salt (E) is a salt composed of an anion having two or more halogen atoms connected to boron and an alkali metal cation or a quaternary ammonium cation, and
   the phosphorus compound (F) is a compound represented by Formula (18) below: 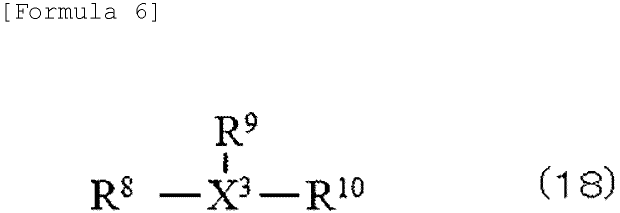
   wherein X³ is a P(=O) group or a P(=S) group, R⁸, R⁹, and R¹⁰ are each independently a group selected from the group consisting of a hydrogen atom, a hydroxyl group, an alkyl group, an alkenyl group, an alkoxy group, a siloxy group, and a thiosilane group, and at least one of R⁸, R⁹, and R¹⁰ is a siloxy group or a thiosilane group.
14. The method according to 13, further comprising, after the step 1:
   a step 2 of adding an additional reactant containing the boron halide-based salt (E) and/or the phosphorus compound (F) to allow the binding reaction by the elimination of halogenated silyl to proceed,
   wherein the step 2 is carried out once or more.

### Advantageous Effects of Invention

According to the present invention, it is possible to obtain an electrolyte, a reinforcing agent and an electrolytic solution that is excellent in solubility to an organic solvent (nonaqueous solvent), and that can provide a power storage device being excellent in charge-discharge efficiency, a resistance value at -10 C, cycle characteristics (change in volume, capacity retention ratio, change in resistance) and balance of high-temperature characteristics; and to obtain a power storage device produced by using them; as well as to obtain methods for producing a lithium boron fluoride complex compound and a lithium complex compound for the above electrolyte or reinforcing agent.

### Description of Embodiments

The present invention above will be described in more detail below. The following description of the constituent elements is for exemplary embodiments of the present invention, and the present invention is not limited to the contents thereof as long as it does not depart from the spirit thereof.

### <Electrolyte>

The electrolyte of the present invention is an electrolyte for power storage device and contains a specific complex compound (A).

### [Complex compound (A)]

The complex compound (A) according to the present invention is a complex compound used for an electrolyte for power storage device, and preferably contains one or more complex compounds represented by Formula (1) below: 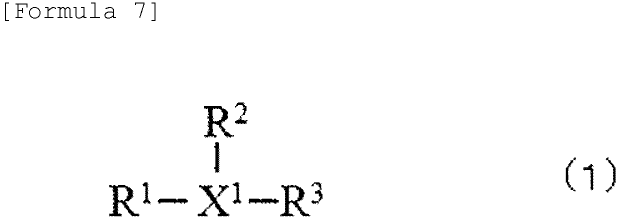
wherein X¹ is a P(=O) group or a P(=S) group,
R¹ to R³ are each independently a group selected from the group consisting of a hydrogen atom, an alkyl group, an alkenyl group, a halogen atom, an alkoxy group, a siloxy group, a thiosilane group, and a group represented by Formula (2) below; or one of two groups selected from the group consisting of R¹ to R³ is an oxygen atom and is linked to the other group to form a ring structure, and
at least one of R¹ to R³ is a group containing a structure represented by Formula (2) below: 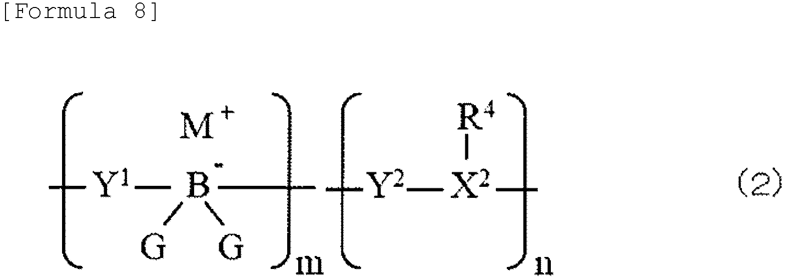
wherein the Formula (2) represents an oligomer having a molecular structure that includes a structure in which respective repeating units represented in brackets are linked to each other, and a linkage order of the repeating units is arbitrary,
m represents a repeating number of the repeating unit put in [ ]ₘ, and is a number of 1 to 10,
n represents a repeating number of the repeating unit put in [ ]ₙ, and is a number of 0 to 10,
M⁺ is an alkali metal cation or a quaternary ammonium cation,
Y¹ and Y² are each independently an oxygen atom or a sulfur atom,
B is a boron atom,
G is a halogen atom,
X² is a P(=O) group or a P(=S) group, and
R⁴ is each independently a group selected from the group consisting of a hydrogen atom, an alkyl group, an alkenyl group, a halogen atom, an alkoxy group, a siloxy group, a thiosilane group, and the group put in [ ]ₘ.

The complex compound (A) more preferably includes one or more boron halide groups.

Here, the boron halide group is a group in which one or more halogen atoms are linked to a boron atom.

The complex compound (A) more preferably includes one or more siloxy groups and/or thiosilane groups.

The complex compound (A) more preferably includes one or more boron halide groups and one or more siloxy groups and/or thiosilane groups.

In the Formula (2), specific examples of the alkali metal cation or the quaternary ammonium cation represented by M⁺ include Li⁺, Na⁺, K⁺, Rb⁺, Cs⁺, Fr⁺, and NH4⁺. Among them, Li⁺ and NH₄⁺ are preferable.

Preferably, the alkyl group in R¹ to R³, and R⁴ is each independently a chain or cyclic alkyl group having 1 to 8 carbon atoms. Specific examples thereof include a methyl group, an ethyl group, a propyl group, a butyl group, a hexyl group, a cyclopropyl group, a cyclobutyl group, a cyclohexyl group, a hydroxyethyl group, a trifluoromethyl group, and a hexafluoroethyl group.

Preferably, the alkenyl group in R¹ to R³, and R⁴ is each independently an alkenyl group having 2 to 5 carbon atoms. Specific examples thereof include a vinyl group, a propenyl group, a butenyl group, and a heptenyl group.

Specific examples of the halogen atom in G and R⁴ include a fluorine atom (F), a chlorine atom (Cl), a bromine atom (Br), an iodine atom (I), and an astatine atom (At). Among them, a fluorine atom (F) and a chlorine atom (Cl) are preferable because these atoms are stably linked to a phosphorus atom and a boron atom.

Preferably, the alkoxy group in R¹ to R³, and R⁴ is each independently an alkoxy group having 2 to 5 carbon atoms. Specific examples thereof include a methoxy group, an ethoxy group, and a butoxy group.

Examples of the siloxy group in R¹ to R³, and R⁴ include a trimethylsiloxy group, a triethylsiloxy group, a triisopropylsiloxy group, a butyldimethylsiloxy group, a tributylsiloxy group, a trimethoxysiloxy group, a triethoxysiloxy group, and a tributoxysiloxy group.

Examples of the thiosilane group in R¹ to R³, and R⁴ include a trimethylthiosilane group, a triethylthiosilane group, a triisopropylthiosilane group, a butyldimethylthiosilane group, a tributylthiosilane group, a trimethoxythiosilane group, a triethoxythiosilane group, and a tributoxythiosilane group.

Specific examples of the complex compound (A) represented by the Formula (1) include complex compounds represented by the following Formulas (3) to (14) and a compound (D) containing a P(=O) group or a P(=S) group and/or a boron halide group.

An electrolyte of the present invention preferably includes one or more complex compounds (A) selected from the group consisting of them.

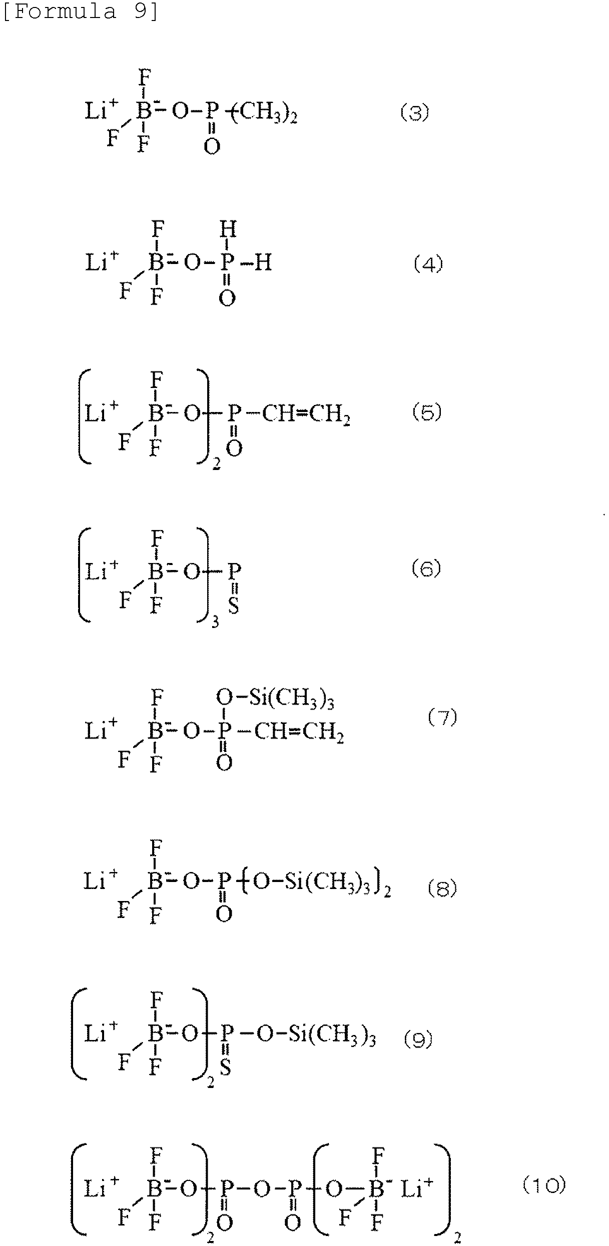

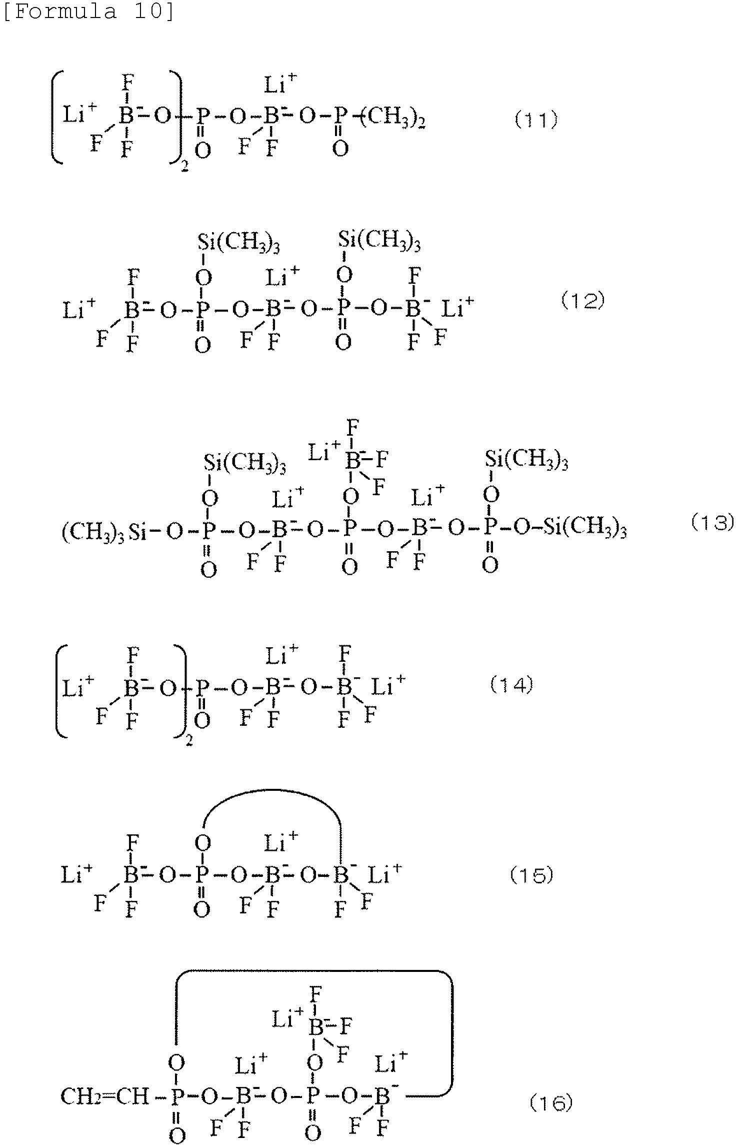

The above Formulas (15) and (16) show that O and B⁻are linked to each other to form a ring structure.

### <Production method of complex compound (A)>

### [Production method 1]

The complex compound (A) according to the present invention can be synthesized by reacting the boron halide compound (B) with the phosphorous salt (C).

In the complex compound (A) synthesized by this production method 1, R⁴ in Formula (2) is each independently a group selected from the group consisting of a hydrogen atom, an alkyl group, an alkenyl group, an alkoxy group, and a group put in [ ]ₘ.

The molar ratio [boron atom of (B)/phosphorus of (C)] at the time of reaction is preferably 1 or more and 3 or less, and more preferably 1.2 or more and 2.5 or less. When the molar ratio [boron atom of (B)/phosphorus of (C)] is smaller than the above ranges, the solubility of the obtained complex compound (A) to a solvent is poor, and there is a tendency that it takes long time to dissolve in an electrolytic solution. When the molar ratio [boron atom of (B)/phosphorus of (C)] is larger than the above ranges, an unreacted boron halide compound may easily remain, deteriorating the lifetime performance of a power storage device.

### (Boron halide compound (B))

The boron halide compound (B) is a compound having a boron halide group.

Specific examples of the boron halide compound (B) include, but are not limited to, boron trihalide, a boron trihalide dimethyl ether complex, a boron trihalide diethyl ether complex, a boron trihalide di-n-butyl ether complex, a boron trihalide di-tert-butyl ether complex, a boron trihalide tert-butyl methyl ether complex, a boron trihalide tetrahydrofuran complex, a boron trihalide methanol complex, a boron trihalide ethanol complex, a boron trihalide propanol complex, a boron trihalide butanol complex, a boron trihalide phenol complex, a boron trihalide ethylene carbonate complex, a boron trihalide ethyl methyl carbonate complex, a boron trihalide dimethyl carbonate complex, a boron trihalide diethyl carbonate complex, a boron trihalide sulfolane complex, a boron trihalide acetic acid complex, a boron trihalide aqueous solution, and a compound that is a reaction product of any of these and the phosphorous salt (C) and has a boron halide group.

The halogen is preferably fluorine or chlorine. As the boron halide compound (B), a boron fluoride compound as above is more preferably used.

Specific examples of the boron fluoride compound include, but are not limited to, boron trifluoride, a boron trifluoride dimethyl ether complex, a boron trifluoride diethyl ether complex, a boron trifluoride di-n-butyl ether complex, a boron trifluoride di-tert-butyl ether complex, a boron trifluoride tert-butyl methyl ether complex, a boron trifluoride tetrahydrofuran complex, a boron trifluoride methanol complex, a boron trifluoride ethanol complex, a boron trifluoride propanol complex, a boron trifluoride butanol complex, a boron trifluoride phenol complex, a boron trifluoride ethylene carbonate complex, a boron trifluoride ethyl methyl carbonate complex, a boron trifluoride dimethyl carbonate complex, a boron trifluoride diethyl carbonate complex, a boron trifluoride sulfolane complex, a boron trifluoride acetic acid complex, a boron trifluoride aqueous solution, and a compound that is a reaction product of any of these and the phosphorous salt (C) and has a boron fluoride group.

Specific examples of the boron chloride compound include, but are not limited to, boron trichloride, a boron trichloride diethyl ether complex, a boron trichloride methanol complex, a boron trichloride ethanol complex, a boron trichloride butanol complex, and a compound that is a reaction product of any of these and the phosphorous salt (C) and has a boron chloride group.

Among them, more preferred are boron trifluoride, a boron trifluoride dimethyl ether complex, a boron trifluoride diethyl ether complex, a boron trifluoride methanol complex, a boron trifluoride ethanol complex, a boron trifluoride propanol complex, a boron trifluoride butanol complex, a boron trifluoride ethylene carbonate complex, a boron trifluoride ethyl methyl carbonate complex, a boron trifluoride dimethyl carbonate complex, a boron trifluoride diethyl carbonate complex, and a boron trifluoride sulfolane complex are preferable, and boron trifluoride, a boron trifluoride methanol complex, a boron trifluoride butanol complex, a boron trifluoride ethylene carbonate complex, a boron trifluoride ethyl methyl carbonate complex, a boron trifluoride dimethyl carbonate complex, and a boron trifluoride diethyl carbonate complex.

### (Phosphorous salt (C))

The phosphorous salt (C) is a compound represented by the following Formula (17). 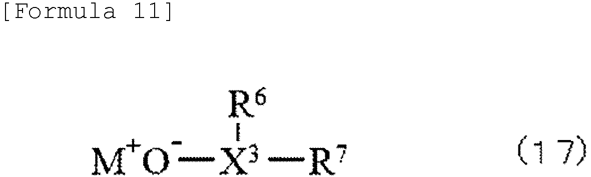 wherein M⁺ is an alkali metal cation or a quaternary ammonium cation, X³ is a P(=O) group or a P(=S) group, and R⁶ and R⁷ are each independently a group selected from the group consisting of a hydrogen atom, a hydroxyl group, an alkyl group, an alkenyl group, an alkoxy group, a siloxy group, a thiosilane group, -O⁻M⁺, and -S⁻M⁺.

Examples of the phosphorous salt (C) include, but are not limited to: a salt of phosphinic acid, dimethylphosphinic acid, phosphonic acid, methylphosphonic acid, vinylphosphonic acid, phosphoric acid, diphosphoric acid, polyphosphoric acid, methyl phosphate, ethyl phosphate, monothiophosphoric acid, dithiophosphoric acid, trithiophosphoric acid, tetrathiophosphoric acid, or the like, and an alkali metal cation or a quaternary ammonium cation; and a compound that is a reaction product of any of these and the boron halide compound (B) and has a M⁺O-X³ group.

As the cation, a lithium cation and a sodium ion are preferable.

Specific examples of the phosphorous salt (C) include, but are not limited to, lithium phosphinate, lithium dimethyl phosphinate, lithium phosphonate, lithium methylphosphonate, lithium vinyl phosphonate, lithium phosphate, lithium diphosphate, lithium polyphosphate, lithium methyl phosphate, lithium ethyl phosphate, lithium diethyl phosphate, lithium monothiophosphate, lithium tetrathiophosphate, and a compound that is a reaction product of any of these and the boron halide compound (B) and has a M⁺O-X³ group.

Among them, preferred are lithium phosphinate, lithium phosphonate, lithium methylphosphonate, lithium vinyl phosphonate, lithium phosphate, lithium diphosphate, lithium polyphosphate, lithium ethyl phosphate, lithium diethyl phosphate, lithium monothiophosphate, and lithium tetrathiophosphate, for example.

### [Production method 2]

The complex compound (A) according to the present invention can be synthesized by a method including a step 1 of allowing binding reaction between a boron halide-based salt (E) and a phosphorus compound (F) by elimination of halogenated silyl to proceed, or a method including the step 1 and a step 2 in this order, wherein the step 2 is carried out once or more.

In the complex compound (A) synthesized by this production method 2, R⁴ in Formula (2) is each independently a group selected from the group consisting of a hydrogen atom, an alkyl group, an alkenyl group, a halogen atom, an alkoxy group, a siloxy group, a thiosilane group, and a group put in [ ]ₘ.

### (Step 1)

A step of allowing binding reaction between a boron halide-based salt (E) and a phosphorus compound (F) by elimination of halogenated silyl to proceed.

### (Step 2)

A step of, after the step 1, adding an additional reactant containing the boron halide-based salt (E) and/or the phosphorus compound (F) to allow the binding reaction by the elimination of halogenated silyl to proceed.

The reaction by elimination of halogenated silyl proceeds under a condition without a solvent, but a solvent may be appropriately added if necessary.

Controlling the reaction temperature can allow the reaction by elimination of halogenated silyl to proceed efficiently. The reaction temperature is not particularly limited as long as the reaction by elimination of halogenated silyl can proceed efficiently.

For example, the reaction temperature can be selected from the range of 10 to 150°C according to the kind of solvent to be used, and the reaction can be suitably facilitated at a temperature within the range of 20 to 120°C. The reaction temperature is more preferably in the range of 40 to 100°C in view of easily controlling the reaction rate.

However, the conditions for the present production method is not limited to these.

The molar ratio of the boron element in the boron halide-based salt (E) to the silyl group of the phosphorus compound (F), [boron atom of (E)/silyl group of (F)], in the step 1 is not particularly limited and can be appropriately selected according to the desired chemical structure of the complex compound (A) to be obtained.

For example, the molar ratio [boron atom of (E)/silyl group of (F)] is preferably **0.2** or more and 5 or less, and more preferably **0.3** or more and 3.0 or less, and the amount of boron may be larger than the amount of the silyl group if necessary. When the molar ratio [boron atom of (E)/silyl group of (F)] is lower than the above range, an unreacted silyl group increases so that the complex compound (A) tends to have poor solubility. When the molar ratio [boron atom of (E)/silyl group of (F)] is higher than the above range, an unreacted boron halide-based salt (E) increases so that the lifetime of a resulting power storage device is easily shortened.

The kinds, order of addition, and amounts of the boron halide-based salt (E) and/or the phosphorus compound (F) additionally added in the step 2 are not particularly limited and can be appropriately selected according to the desired chemical structure of the obtained complex compound (A).

For example, the molar ratio of the silyl group in the phosphorus compound (F) additionally added or the boron atom in the boron halide-based salt (E) additionally added to the unreacted boron atom in the boron halide-based salt (E) or the unreacted silyl group in the phosphorus compound (F) in the step 1,
[(additional boron atom + additional silyl group in step 2)/(unreacted boron atom + unreacted silyl group in step 1)], is preferably 0.2 or more and 5 or less, and more preferably 0.3 or more and 3.0 or less.

For example, the molar ratio [boron atom of (E)/silyl group of (F)] in the whole process including the step 1 and the step 2 is preferably 0.2 or more and 5.0 or less, and more preferably 0.3 or more and 3.0 or less.

### (Boron halide-based salt (E))

The boron halide-based salt (E) is a salt composed of an anion having two or more halogen atoms connected to boron, and an alkali metal cation or a quaternary ammonium cation, and allows the reaction by elimination of halogenated silyl to proceed.

Examples of the boron halide-based salt (E) include, but are not limited to, a complex salt containing a functional group of boron dihalide or boron trihalide in the molecule, tetrahalogenated borate, monohalogenated phosphate, dihalogenated phosphate, and hexahalogenated phosphate.

Examples of the boron halide-based salt (E) include, but are not limited to, phosphinic acid-based complex salts, phosphonic acid-based complex salts, phosphoric acid-based complex salts, condensed phosphoric acid-based complex salts, thiophosphoric acid-based complex salts, and a compound that is a reaction product of any of these and the phosphorus compound (F) and includes an anion having two or more halogen atoms connected to boron.

Specific examples of the phosphinic acid-based complex salts include, but are not limited to, tetrahalogenated borate, a lithium oxide·bis(boron trihalide) salt, a lithium sulfide·bis(boron trihalide) salt, a phosphinate·boron trihalide complex salt, a dimethylphosphinate·boron trihalide complex salt, and a difluorophosphate·boron trihalide complex salt.

Specific examples of the phosphonic acid-based complex salts include, but are not limited to, a phosphonate salt·boron trihalide complex salt, a methylphosphonate salt·boron trihalide complex, a vinylphosphonate salt·boron trihalide complex salt, and a fluorophosphate salt·boron trihalide complex salt.

Specific examples of the phosphoric acid-based complex salts include, but are not limited to, a phosphate salt·boron trihalide complex salt, a methyl phosphate salt·boron trihalide complex salt, and an ethyl phosphate salt·boron trihalide complex salt.

Specific examples of the condensed phosphoric acid-based complex salts include, but are not limited to, a diphosphate salt·boron trihalide complex salt, and a polyphosphate salt ·boron trihalide complex salt.

Specific examples of the thiophosphoric acid-based complex salts include, but are not limited to, a monothiophosphate salt·boron trihalide complex salt, a dithiophosphate salt·boron trihalide complex salt, a trithiophosphate salt·boron trihalide complex salt, and a tetrathiophosphate salt·boron trihalide complex salt.

The halogen contained in the anion of the boron halide-based salt (E) is preferably fluorine.

The cation of the boron halide-based salt (E) is preferably a lithium cation or a sodium cation.

Specific examples of the boron halide-based salt (E) include, but are not limited to, lithium tetrafluoroborate, a lithium oxide·bis(boron trifluoride) salt, lithium sulfide·bis(boron trifluoride) salt, a lithium phosphinate·boron trifluoride complex salt, a lithium dimethylphosphinate·boron trifluoride complex salt, a lithium phosphonate·boron trifluoride complex salt, a methylphosphonate salt·boron trifluoride complex, a lithium vinyl phosphonate·boron trifluoride complex salt, a lithium phosphate·boron trifluoride complex salt, a lithium diphosphate·boron trifluoride complex salt, a lithium polyphosphate·boron trifluoride complex salt, a lithium phosphate·boron trifluoride complex salt, a lithium methyl phosphate·boron trifluoride complex salt, a lithium ethyl phosphate·boron trifluoride complex salt, a lithium monothiophosphate·boron trifluoride complex salt, a lithium dithiophosphate·boron trifluoride complex salt, a lithium trithiophosphate·boron trifluoride complex salt, a lithium tetrathiophosphate·boron trifluoride complex salt, and a compound that is a reaction product of any of these and the phosphorus compound (F) and includes an anion having two or more halogen atoms connected to boron.

Among them, preferred are lithium tetrafluoroborate, a lithium oxide·bis(boron trifluoride) salt, a lithium sulfide·bis(boron trifluoride) salt, a lithium phosphinate·boron trifluoride complex salt, a lithium phosphonate·boron trifluoride complex salt, a lithium methylphosphonate·boron trifluoride complex salt, a lithium vinyl phosphonate·boron trifluoride complex salt, a lithium phosphate·boron trifluoride complex salt, a lithium diphosphate·boron trifluoride complex salt, a lithium polyphosphate·boron trifluoride complex salt, a lithium ethyl phosphate·boron trifluoride complex salt, a lithium diethyl phosphate·boron trifluoride complex salt, a lithium monothiophosphate·boron trifluoride complex salt, and a lithium tetrathiophosphate·boron trifluoride complex salt.

### (Phosphorus compound (F))

The phosphorus compound (F) is a compound represented by the following Formula (18), and is a compound having a siloxy group or a thiosilane group linked to a P(=O) group or a P(=S) group. 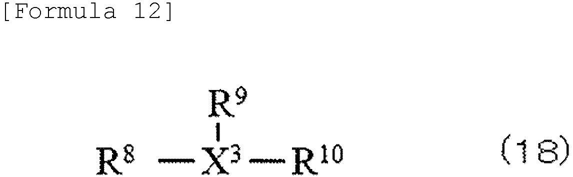 wherein X³ is a P(=O) group or a P(=S) group, R⁸, R⁹, and R¹⁰ are each independently a group selected from the group consisting of a hydrogen atom, a hydroxyl group, an alkyl group, an alkenyl group, a siloxy group, and a thiosilane group, and at least one of R⁸, R⁹, and R¹⁰ is a siloxy group or a thiosilane group.

Examples of the phosphorus compound (F) include, but are not limited to, derivatives of phosphinic acid, phosphonic acid, vinylphosphonic acid, phosphoric acid, diphosphoric acid, triphosphoric acid, tetraphosphoric acid, polyphosphoric acid, monothiophosphoric acid, dithiophosphoric acid, trithiophosphoric acid, tetrathiophosphoric acid, and the like.

Specific examples of the phosphorus compound (F) include, but are not limited to, trimethylsilyl phosphinate, trimethylsilyl dimethylphosphinate, bis(trimethylsilyl) phosphonate, bis(trimethylsilyl) vinylphosphonate, bis(trimethylsilyl) allylphosphonate, tris(trimethylsilyl) phosphate, hexa(trimethylsilyl) diphosphate, tris(trimethylsilyl) polyphosphate, tris(trimethylsilyl) monothiophosphate, tris(trimethylsilyl) dithiophosphate, tris(trimethylsilyl) trithiophosphate, tris(trimethylsilyl) tetrathiophosphate, and a compound that is a reaction product of the above and the boron halide-based salt (E) and has a siloxy group or a thiosilane group linked to a P(=O) group or a P(=S) group.

Among them, preferred are trimethylsilyl phosphinate, bis(trimethylsilyl) phosphonate, bis(trimethylsilyl) vinylphosphonate, tris(trimethylsilyl) phosphate, hexa(trimethylsilyl) diphosphate, tris(trimethylsilyl) polyphosphate, tris(trimethylsilyl) monothiophosphate, and tris(trimethylsilyl) tetrathiophosphate, for example.

### <Reinforcing agent>

In the present invention, the reinforcing agent is a compound that increases the charge-discharge efficiency of a power storage device, elongates the lifetime of the power storage device, and exhibits the effect of decreasing the resistance of the power storage device.

The reinforcing agent of the present invention can be used with the electrolyte of the present invention.

The reinforcing agent of the present invention can also be used with a lithium-based electrolyte that does not correspond to the electrolyte of the present invention.

The reinforcing agent of the present invention can also be used in combination with a general-purpose reinforcing agent. The combination ratio is not particularly limited.

For example, the content of the reinforcing agent of the present invention in the whole reinforcing agent contained in the power storage device is preferably 0.1% by mass or more and 100% by mass or less, and more preferably 0.2% by mass or more and 70% by mass or less.

Specific examples of the general-purpose reinforcing agent include, but are not limited to, a sulfur-containing compound, a cyclic acid anhydride, a nitrile compound, and an isocyanate compound.

Specific examples of the sulfur-containing compound include 1,3-propanesultone (PS), propenesultone, ethylene sulfite, hexahydrobenzo[1,3,2]dioxathiolan-2-oxide (may be referred to as 1,2-cyclohexane diol cyclic sulfite), 5-vinyl-hexahydro 1,3,2-benzodioxathiol-2-oxide, 1,4-butanediol dimethanesulfonate, 1,3-butanediol dimethanesulfonate, methylenemethanedisulfonic acid, ethylenemethanedisulfonic acid, N,N-dimethylmethanesulfonamide, N,N-diethylmethanesulfonamide, divinyl sulfone, and 1,2-bis(vinylsulfonyl)methane.

Specific examples of the cyclic acid anhydride include carboxylic anhydrides such as glutaric anhydride, maleic anhydride, citraconic anhydride, glutaconic anhydride, itaconic anhydride, succinic anhydride, diglycolic anhydride, cyclohexane dicarboxylic anhydride, cyclopentane tetracarboxylic dianhydride, 4-cyclohexene-1,2-dicarboxylic anhydride, 3,4,5,6-tetrahydrophthalic anhydride, 5-norbornene-2,3-dicarboxylic anhydride, phenylsuccinic anhydride, 2-phenylglutaric anhydride, phthalic anhydride, pyromellitic anhydride, fluorosuccinic anhydride, and tetrafluorosuccinic anhydride, 1,2-ethanedisulfonic anhydride, 1,3-propanedisulfonic anhydride, 1,4-butanedisulfonic anhydride, 1,2-benzenedisulfonic anhydride, tetrafluoro-1,2-ethanedisulfonic anhydride, hexafluoro-1,3-propanedisulfonic anhydride, octafluoro-1,4-butanedisulfonic anhydride, 3-fluoro-1,2-benzenedisulfonic anhydride, 4-fluoro-1,2-benzenedisulfonic anhydride, and 3,4,5,6-tetrafluoro-1,2-benzenedisulfonic anhydride.

Specific examples of the nitrile compound include pentanenitrile, octanenitrile, decanenitrile, dodecanenitrile, crotononitrile, succinonitrile, glutaronitrile, adiponitrile, pimelonitrile, suberonitrile, and glutaronitrile.

Specific examples of the isocyanate compound include compounds such as alkyl isocyanates such as methyl isocyanate, ethyl isocyanate, propyl isocyanate, isopropyl isocyanate, butyl isocyanate, and tert-butyl isocyanate, cycloalkyl isocyanates such as cyclohexyl isocyanate, allyl isocyanate, propargyl isocyanate, monomethylene diisocyanate, dimethylene diisocyanate, tetramethylene diisocyanate, hexamethylene diisocyanate, octamethylene diisocyanate, decamethylene diisocyanate, 1,4-diisocyanato-2-butene, toluene diisocyanate, xylene diisocyanate, 1,3-bis(isocyanatomethyl)cyclohexane, 1,4-diisocyanato cyclohexane, dicyclohexylmethane-4,4'-diisocyanate, bicyclo[2.2.1]heptane-2,5-diylbis(methylisocyanate), bicyclo[2.2.1]heptane-2,6-diylbis(methylisocyanate), isophorone diisocyanate, carbonyl diisocyanate, 1,4-diisocyanatobutane-1,4-dione, and trimethyl hexamethylene diisocyanate.

### <Electrolytic solution>

An electrolytic solution of the present invention is a liquid for power storage device and contains an electrolyte and an organic solvent (nonaqueous solvent). The electrolytic solution of the present invention can further contain a reinforcing agent.

The electrolytic solution of the present invention can contain the complex compound (A) as the electrolyte and/or the reinforcing agent.

In addition, the electrolytic solution of the present invention can contain an electrolyte and/or a reinforcing agent other than the complex compound (A).

In the electrolytic solution, cations exist, and the cations preferably include lithium cations, sodium cations, or quaternary ammonium cations, more preferably include lithium cations or sodium cations, and particularly preferably include lithium cations.

Specific examples of the electrolyte other than the complex compound (A) include, but are not limited to, LiPF₆, LiBF₄, LiN(FSO₂)₂, LiN(CF₃SO₂)₂, LiN(C₂F₅SO₂)₂, LiN(CF₃SO₂)(C₂F₅SO₂), and LiN(CF₃SO₂)(C₄F₉SO₂).

The concentration of the total cations, particularly the total lithium cations in the whole electrolytic solution is preferably 0.1 mol/L or more and 5.0 mol/L or less, and more preferably 0.7 mol/L or more and 2.5 mol/L or less. When the concentration of the alkali metal cation or the quaternary ammonium cation in the whole electrolytic solution is lower than the above range, it is difficult to achieve sufficient charge-discharge characteristics. Even when the concentration is higher than the above range, internal resistance easily increases, and the charge-discharge characteristics are not sufficiently improved.

The concentration of the total cations, particularly lithium cations, derived from the complex compound (A), in the whole electrolytic solution is preferably 0.01 mol/L or more and 3.0 mol/L or less, and more preferably 0.1 mol/L or more and 2.0 mol/L or less, in the whole electrolytic solution.

When the concentration of the total cations derived from the complex compound (A), particularly lithium cations in the whole electrolytic solution is lower than the above range, the surface protection of electrodes of the power storage device is likely to be insufficient. Even when the concentration is higher than the above range, the conductivity of lithium ions of the electrolytic solution is not significantly improved.

The percentage of the complex compound (A) by mass in the whole electrolytic solution is preferably 0.01% by mass or more and 30% by mass or less, and more preferably 0.1% by mass or more and 20% by mass or less. When the percentage of the complex compound (A) by mass in the whole electrolytic solution is lower than the above range, the protection of electrode surfaces of the power storage device is likely to be insufficient. Even when the percentage is higher than the above range, the conductivity of lithium ions of the electrolytic solution is not significantly improved.

### [Organic solvent]

Various organic solvents can be used as an organic solvent for the electrolytic solution of the present invention.

For example, the organic solvent for the electrolytic solution of the present invention preferably contains an aprotic polar solvent.

Among aprotic polar solvents, a carbonate-based solvent such as cyclic carbonates or chain carbonates is preferably used in view of improving ion conductivity, and a cyclic carbonate and a chain carbonate are more preferably used in combination. It is particularly preferable to use a saturated cyclic carbonate and an unsaturated cyclic carbonate as the cyclic carbonate to contain three kinds of carbonates.

When the cyclic carbonate and/or chain carbonate is contained, another nonaqueous solvent such as lactones, sulfones, ethers, nitriles, chain carboxylates, chain glycol ethers, fluorine-containing ethers, and phosphates can be further contained if necessary.

The volume ratio of the cyclic carbonate/chain carbonate in the electrolytic solution is not particularly limited as long as conductivity of lithium ions can be highly sufficiently ensured.

For example, the volume ratio of the cyclic carbonate/chain carbonate is preferably 10 to 70/30 to 90, and more preferably 20 to 50/50 to 80.

As the cyclic carbonate, an unsaturated cyclic carbonate can be used.

The content of the unsaturated cyclic carbonate is preferably 0.01 to 10% by volume, and more preferably 0.1 to 5% by volume in the whole amount of the organic solvent.

When the content of the cyclic carbonate is smaller than the above range, the degree of dissociation or the solubility of the complex compound as the electrolyte easily decreases, and the ion conductivity of the electrolytic solution easily decreases. On the other hand, when the content of the cyclic carbonate is larger than the above range, the electrolytic solution easily has a high viscosity and easily solidifies at low temperatures, which makes it difficult to obtain sufficient charge-discharge characteristics.

When the content of the chain carbonate is smaller than the above range, the electrolytic solution easily has a high viscosity and easily solidifies at low temperatures, which makes it difficult to obtain sufficient charge-discharge characteristics. On the other hand, when the content of the chain carbonate is larger than the above range, the degree of dissociation or the solubility of the complex compound as the electrolyte easily decreases, and the ion conductivity of the electrolytic solution easily decreases.

When the content of the unsaturated cyclic carbonate is smaller than the above range, it is difficult to form a good coating film on the surface of the negative electrode, which easily leads to a decrease in cycle characteristics. On the other hand, when the content of the unsaturated cyclic carbonate is larger than the above range, gas is easily generated from the electrolytic solution during high-temperature storage to easily increase the pressure in the power storage device, which is undesirable for practical use.

Specific examples of the aprotic polar solvent include cyclic carbonates, chain carbonates, lactones, sulfones, cyclic ethers, chain ethers, nitriles, chain carboxylates, chain glycol ethers, fluorine-containing ethers, phosphorus-containing compounds, dimethyl sulfoxide, dichloroethane, chlorobenzene, and nitrobenzene. These may be used singly or in combination of two or more thereof.

Specific examples of the cyclic carbonates include ethylene carbonate, propylene carbonate, 1,2-butylene carbonate, 2,3-butylene carbonate, 1,2-pentylene carbonate, 2,3-pentylene carbonate, trifluoromethyl ethylene carbonate, fluoroethylene carbonate, and 4,5-difluoroethylene carbonate. Among them, ethylene carbonate, propylene carbonate, and fluoroethylene carbonate are preferable. When propylene carbonate is used, an electrolytic solution stable in a wide temperature range can be obtained. These specific compounds can be used singly or in combination of two or more thereof.

Examples of the chain carbonates include chain carbonates having 3 to 9 carbon atoms. Specific examples thereof include ethyl methyl carbonate, dimethyl carbonate, diethyl carbonate, methyl propyl carbonate, dipropyl carbonate, methyl butyl carbonate, dibutyl carbonate, ethyl propyl carbonate, and methyl trifluoroethyl carbonate. In the above, the propyl group each independently may be an n-propyl group or an isopropyl group, and the butyl group each independently may be an n-butyl group, an isobutyl group, or a t-butyl group. Among them, ethyl methyl carbonate, dimethyl carbonate, and diethyl carbonate are preferable. These specific compounds can be used singly or in combination of two or more thereof.

Specific examples of the unsaturated cyclic carbonates include vinylene carbonate derivatives and alkenyl ethylene carbonate.

Specific examples of the vinylene carbonate derivatives include vinylene carbonate, fluorovinylene carbonate, methyl vinylene carbonate, fluoromethyl vinylene carbonate, ethyl vinylene carbonate, propyl vinylene carbonate, butyl vinylene carbonate, dimethyl vinylene carbonate, diethyl vinylene carbonate, and dipropyl vinylene carbonate.

Specific examples of the alkenyl ethylene carbonate include 4-vinyl ethylene carbonate, 4-vinyl-4-methyl ethylene carbonate, 4-vinyl-4-ethyl ethylene carbonate, and 4-vinyl-4-n-propyl ethylene carbonate. These specific compounds can be used singly or in combination of two or more thereof.

Examples of the cyclic carboxylates (lactones) include those having 3 to 9 carbon atoms. Examples thereof include γ-butyrolactone, γ-valerolactone, γ-caprolactone, and ε-caprolactone. Among them, γ-butyrolactone and γ-valerolactone are more preferable. These specific compounds can be used singly or in combination of two or more thereof.

Examples of the chain carboxylates include those having 3 to 9 carbon atoms. Specific examples thereof include methyl acetate, ethyl acetate, n-propyl acetate, isopropyl acetate, n-butyl acetate, isobutyl acetate, t-butyl acetate, methyl propionate, ethyl propionate, n-propyl propionate, isopropyl propionate, n-butyl propionate, isobutyl propionate, and t-butyl propionate. Among them, ethyl acetate, methyl propionate, and ethyl propionate are preferable. These specific compounds can be used singly or in combination of two or more thereof.

Examples of the chain glycol ethers include those having 3 to 6 carbon atoms. Specific examples thereof include dimethoxymethane, dimethoxyethane, diethoxymethane, diethoxyethane, ethoxymethoxymethane, and ethoxymethoxyethane. Among them, dimethoxyethane and diethoxyethane are more preferable. These specific compounds can be used singly or in combination of two or more thereof.

Specific examples of the fluorine-containing ethers include 1,1,2,2-tetrafluoroethyl-2,2,3,3-tetrafluoropropyl ether, 1,1,2,2-tetrafluoroethyl-2,2,3,3,3-pentafluoropropyl ether, and ethoxy-2,2,2-trifluoroethoxy-ethane. These specific compounds can be used singly or in combination of two or more thereof.

Specific examples of the sulfones include dimethyl sulfone, diethyl sulfone, ethyl methyl sulfone, methyl propyl sulfone, sulfolane, 2-methyl sulfolane, and 3-methyl sulfolane.

Specific examples of the cyclic ethers include tetrahydrofuran, 2-methyl tetrahydrofuran, dioxane, dioxolane, and 4-methyldioxolane.

Specific examples of the chain ethers include dimethyl ether.

Specific examples of the nitriles include acetonitrile, succinonitrile, adiponitrile, and benzonitrile.

Specific examples of the amides include N,N-dimethylformamide and dimethylacetamide.

Specific examples of the phosphorus-containing compound include diethyl vinylphosphate, allyl diethyl phosphate, propargyl diethyl phosphate, trivinyl phosphate, triallyl phosphate, tripropargyl phosphate, diallyl ethyl phosphate, dipropargyl ethyl phosphate, 2-acryloyloxyethyl diethyl phosphate, and tris(2-acryloyloxyethyl)phosphate.

### <Power storage device>

The power storage device of the present invention is a power storage device produced by using the electrolytic solution of the present invention or a power storage device produced by using the electrolyte and/or the reinforcing agent of the present invention.

The power storage device of the present invention may be a liquid-type power storage device, a semisolid-type power storage device, or a solid-type power storage device.

Specific examples of the power storage device of the present invention include various power storage devices such as a lithium-ion secondary battery, an electric double layer capacitor, and a hybrid-type battery in which one of a positive electrode and a negative electrode is a battery and the other is a double layer.

The shape of the power storage device of the present invention is not particularly limited, and may have various shapes such as a cylinder type, a square type, an aluminum lamination type, a coin type, and a button type.

The power storage device of the present invention has low electric resistance, good initial characteristics, and excellent cycle characteristics and high-temperature characteristics because it is produced by using, for example, the electrolyte, the electrolytic solution, or the reinforcing agent of the present invention.

In addition, the power storage device of the present invention can be produced by using another electrolyte, electrolytic solution, or reinforcing agent, in combination with the electrolyte, the electrolytic solution, or the reinforcing agent of the present invention.

Hereinafter, a lithium-ion secondary battery will be described as one example.

The lithium-ion secondary battery is a secondary battery that performs charge or discharge when lithium ions are transferred between a positive electrode and a negative electrode, and includes a positive electrode, a negative electrode, a separator, an electrolyte (electrolytic solution), and others.

### (Negative electrode)

Examples of the configuration of the negative electrode include a configuration in which a negative electrode active material is formed on a current collector such as foil made of copper, an expand metal, a carbon material, or a composite material thereof.

Examples of the negative electrode active material of the negative electrode include a carbon material that can be doped with and dedoped from lithium ions, metallic lithium, a lithium-containing alloy, or silicon that can be alloyed with lithium, a silicon alloy, tin, a tin alloy, a tin oxide that can be doped with and dedoped from lithium ions, a silicon oxide, a transition metal oxide that can be doped with and dedoped from lithium ions, a transition metal nitrogen compound that can be doped with and dedoped from lithium ions, and a mixture thereof.

It may contain, for example, a polyvinylidene fluoride-based binder, a latex-based binder, or another binder to improve adhesiveness of the negative electrode active material to the current collector, and it may contain carbon black, carbon black, amorphous whisker carbon, carbon nanofiber, or the like as a conductive assistant.

Examples of the carbon material constituting the negative electrode active material include pyrolytic carbons, cokes (e.g., pitch coke, needle coke, and petroleum coke), graphite, a sintered product of an organic polymer compound (substance obtained by sintering a phenol resin, a furan resin, or the like at an appropriate temperature, followed by carbonization), carbon fibers, activated charcoal, and graphite (e.g., natural graphite, artificial graphite, carbon-coated graphite, graphite-coated graphite, and resin-coated graphite).

Particularly the spacing (d002) of the (002) plane of the carbon material is preferably 0.340 nm or less as measured by the X-ray diffraction analysis.

Graphite having a true density of 1.70 g/cm³ or more or a highly crystalline carbon material having properties similar thereto is preferable.

Use of such a carbon material in the negative electrode makes it possible to increase energy density of the nonaqueous electrolytic solution power storage device.

As the carbon material, a material containing boron, a material coated with a metal such as gold, platinum, silver, copper, Sn, or Si, or a material coated with a salt such as a magnesium salt, a calcium salt, or the like can be used. These carbon materials can be used singly or may be used in combination by appropriately combining and mixing two or more thereof.

It is preferable to use silicon that can be alloyed with lithium, a silicon alloy, tin, and a tin alloy, tin oxide that can be doped with and dedoped from lithium ions, silicon oxide, transition metal oxide that can be doped with and dedoped from lithium ions, or the like, because any of these has a higher theoretical capacity per weight than the above-mentioned carbon materials.

### (Positive electrode)

Examples of the configuration of the positive electrode include a configuration in which a positive electrode active material is formed on a current collector such as foil made of aluminum, titanium, or stainless, an expand metal, a carbon material, or a composite material thereof.

The positive electrode active material of the positive electrode can be formed from various materials that enable charge and discharge. Examples thereof include a lithium-containing transition metal oxide, a lithium-containing transition metal composite oxide using one or more kinds of transition metals, a transition metal oxide, a transition metal sulfide, a metal oxide, and an olivine-type metallic lithium salt.

For example, it is possible to use a composite oxide of lithium and one or more transition metals (lithium transition metal composite oxide) represented by LiₓMO₂, where M is one or more transition metals, and x is a numerical value that varies according to the condition of the charge and discharge of the power storage device and is generally 0.05 ≤ x ≤ 1.20, such as LiCoO₂, LiNiO₂, LiMn₂O₄, or LiMnO₂; a metallic composite oxide formed by replacing a part of the transition metal atoms as the main components of the above lithium transition metal composite oxides with another metal such as Al, Ti, V, Cr, Mn, Fe, Co, Li, Ni, Cu, Zn, Mg, Ga, Zr, Si, or Yb; a chalcogenide of a transition element such as FeS₂, TiS₂, V₂O₅, MoO₃, or MoS₂; or a polymer such as polyacetylene or polypyrrole.

Among them, a material such as a lithium transition metal composite oxide that can be doped with or dedoped from Li, or a metallic composite oxide formed by replacing a part of transition metal atoms with another metal is preferable.

Furthermore, it is also possible to use a material composed of any of these positive electrode active materials as the main component and a substance attached to the surface thereof and having a different composition from the substance as the positive electrode active material. Examples of the substance attached to the surface include a metal oxide, a metal sulfide, and a metal carbonate.

Specific examples of the metal oxide include aluminum oxide, silicon oxide, titanium oxide, zirconium oxide, magnesium oxide, calcium oxide, boron oxide, antimony oxide, and bismuth oxide.

Specific examples of the metal sulfide include lithium sulfate, sodium sulfate, potassium sulfate, magnesium sulfate, calcium sulfate, and aluminum sulfate.

Specific examples of the metal carbonate include carbonates such as lithium carbonate, calcium carbonate, and magnesium carbonate.

It may contain, for example, a polyvinylidene fluoride-based binder, a latex-based binder, or another binder to improve adhesiveness of the positive electrode active material to the current collector, and it may contain carbon black, amorphous whisker, graphite, carbon nanofiber, or the like to improve the electron conductivity in the positive electrode.

### (Separator)

A separator electrically insulates the positive electrode and the negative electrode, and is preferably a membrane that can permeate lithium ions.

Specific examples of the separator include a porous membrane such as a microporous polymer film.

The microporous polymer film is preferably a porous polyolefin film. More specifically, a porous polyethylene film, a porous polypropylene film, a multilayer film of a porous polyethylene film and a porous polypropylene film, or the like is preferable. If necessary, an insulating layer may be further coated on the surface of the film.

The separator may also contain a polymer electrolyte. Examples of the polymer electrolyte include, but are not limited to, a polymer substance in which a lithium salt is dissolved, and a polymer substance swollen with an electrolytic solution.

### Examples

### <Production of power storage device>

As a power storage device for evaluating an electrolytic solution containing the electrolyte of the present invention or an additive, a lithium-ion secondary battery was produced in the following manner.

### (Production of positive electrode)

N-Methylpyrrolidone was added to a positive electrode material obtained by mixing, in the ratio below, polyvinylidene fluoride as a binding agent, acetylene black as a conductive agent, and a positive electrode active material (LiNi_{0.8}Mn_{0.1}Co_{0.1}O₂) that is a composite oxide powder of lithium, nickel, manganese, and cobalt, to thereby prepare paste.
Polyvinylidene fluoride: 2.0 g
Acetylene black: 2.5 g
Positive electrode active material: 95.5 g

The obtained paste was coated on both sides of an aluminum foil current collector having a thickness of 18 µm, and the solvent was dried and removed, followed by rolling with a roll press, to thereby obtain a positive electrode.

### (Production of negative electrode)

The following materials were mixed with water as a dispersing medium, to thereby prepare slurry.
Artificial graphite carbon powder: 95.8 g
Styrene-butadiene rubber (SBR): 2.0 g
Carboxymethylcellulose: 2.2 g

The obtained slurry was coated on both sides of a copper foil having a thickness of 12 µm, and the solvent was dried and removed, followed by rolling with a roll press, to thereby obtain a negative electrode.

### (Production of battery cell)

The positive electrode and the negative electrode obtained above with a separator having a thickness of 23 µm (F23DHA, available from Toray Battery Separator Film Co., Ltd.) were wound to prepare a flatly wound electrode assembly, and it was housed in a case (rectangular shape: 50 mm long × 40 mm wide × 2.0 mm thick), to produce a battery cell.

### (Production of lithium-ion secondary battery)

Using the battery cell produced above, a lithium-ion secondary battery (laminated battery) was produced by the following procedure.
1) First, 1.0 g of an electrolytic solution was poured through the liquid pouring inlet of the battery cell, the pressure was reduced, and the liquid pouring inlet was sealed.
2) While the sealed battery cell was maintained in an atmosphere of 25°C, it was charged to 4.2 V at 20 mA and then discharged to 3.0 V at 20 mA.
3) The internal gas of the battery cell was removed under reduced pressure to obtain a battery.

### <Various evaluation methods>

### [Initial charge-discharge efficiency]

The battery cell produced above, in which the liquid had been poured and sealing had been done, was charged in an atmosphere of 25°C, with a current of 20 mA passed through it until the voltage of 0 V reached 4.2 V.

Then, while the voltage was maintained at 4.2 V, charging was continued until the current value reached 4 mA, and the total of the current consumed until the current value reached 4 mA was considered as the initial charge capacity value.

Then, a current of 20 mA passed in the energy storage device in the above charged state in an atmosphere of 25°C to perform discharging until the voltage reached 3.0 V. The total of the current consumed until the voltage reached 3.0 V was considered as the initial discharge capacity value.

Then, the initial charge-discharge efficiency (%) was calculated by the following formula. Initial charge-discharge efficiency (%) = (initial discharge capacity/initial charge capacity value) × 100

### [Resistance value at -10°C]

The lithium-ion secondary battery produced above was charged to an SOC (State of Charge) of 50% in an atmosphere of 25°C and then discharged at a rate of 0.2 C for 10 seconds in an atmosphere of -10°C. The voltage after discharging for 10 seconds was measured to determine a direct current resistance value.

Then, in the same procedure, after the battery was discharged at rates of 0.5 C, 1.0 C, or 2.0 C for 10 seconds in an atmosphere of -10°C, the voltages were measured, to calculate the direct current resistance value.

### [Change in volume]

Regarding the lithium-ion secondary battery produced as described above, the volume of the lithium-ion secondary battery in an uncharged state in an atmosphere of 25°C was measured and was used as the initial volume.

Then, it was charged to 4.2 V at a rate of 0.2 C and was allowed to stand in a charged state in an atmosphere of 60°C for 4 weeks.

Then, it was discharged to 3.0 V at a rate of 0.2 C in an atmosphere of 25°C, and the volume of the lithium-ion secondary battery was measured and was used as the volume after high-temperature storage.

The change in volume (%) was calculated by the following formula. Change in volume (%) = (volume after high-temperature storage/initial volume) × 100

### [Capacity retention ratio]

The lithium-ion secondary battery produced as described above was charged to 4.2 V at a rate of 1 C in an atmosphere of 45°C, and then discharged to 3.0 V at a rate of 1 C in the same atmosphere. This was considered as the first cycle, and the discharge capacity value at the first cycle was considered as the initial capacity value.

Next, charge and discharge were repeated 200 cycles under the same conditions, and the discharge capacity value at the 200th cycle was considered as the post-cycling capacity value.

The capacity retention ratio (%) was calculated by the following formula. Capacity retention ratio (%) = (post-cycling capacity value/initial capacity value) × 100

### [Change in resistance]

The lithium-ion secondary battery produced above was charged to an SOC (State of Charge) of 50% in an atmosphere of 25°C and then discharged at rates of 0.2 C, 0.5 C, 1.0 C, and 2.0 C for 10 seconds. The direct current resistance value was measured and was considered as an initial resistance value.

Next, the battery was charged to 4.2 V at a rate of 1 C in an atmosphere of 45°C, and then discharged to 3.0 V at a rate of 1 C in the same atmosphere, which was considered as one cycle. This cycle was repeated 200 times, and a direct current resistance value was measured to obtain the post-cycle resistance value.

Then, the change in resistance was calculated by the following formula. Change in resistance (%) = (post-cycle resistance value/initial resistance value) × 100

### <<Experiment 1: synthesis of complex compound (A)>>

### <Synthesis 1 of complex compound (A)>

### [Example 1]

75 g of lithium dimethylphosphinate as the phosphorous salt (C) was dissolved in 200 ml of methanol in an Erlenmeyer flask in a nitrogen atmosphere, followed by cooling, to thereby obtain a lithium dimethylphosphinate/methanol solution.

On the other hand, 51 g of BF₃ as the boron halide compound (B) was dissolved in 48 g of methanol (molar ratio: BF₃/methanol = 1/2), to thereby prepare 99 g of a BF₃/methanol complex solution.

Then, to the lithium dimethylphosphinate/methanol solution prepared above, the BF₃/methanol complex solution prepared above was added dropwise while cooled and stirred. After completion of the dropping, the resultant was stirred for 3 hours while maintained at 25°C, to thereby obtain a reaction mixture.

Then, methanol was removed from the reaction liquid obtained above using an evaporator, and the resultant was washed with dibutyl ether three times, followed by drying under reduced pressure, to thereby obtain 115 g of a complex compound (A1) (lithium dimethylphosphinate·boron trifluoride complex salt) represented by the following formula (3).

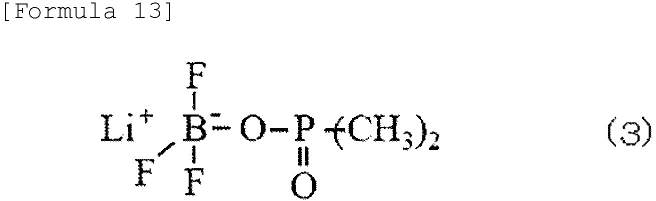

### [Examples 2 to 4]

The phosphorous salt (C) and the boron halide compound (B) were changed to the compounds in amounts described in Table 1, and operation was performed in the same manner as in Example 1 under the reaction conditions described in Table 1, to obtain 98 g of a complex compound (A2) (lithium phosphinate·boron trifluoride) represented by the following formula (4), 86 g of a complex compound (A3) (lithium vinyl phosphonate·bis(boron trifluoride)) represented by the following formula (5), and 75 g of a complex compound (A4) (lithium monothiophosphate·tris(boron trifluoride)) represented by the following formula (6).

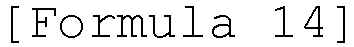

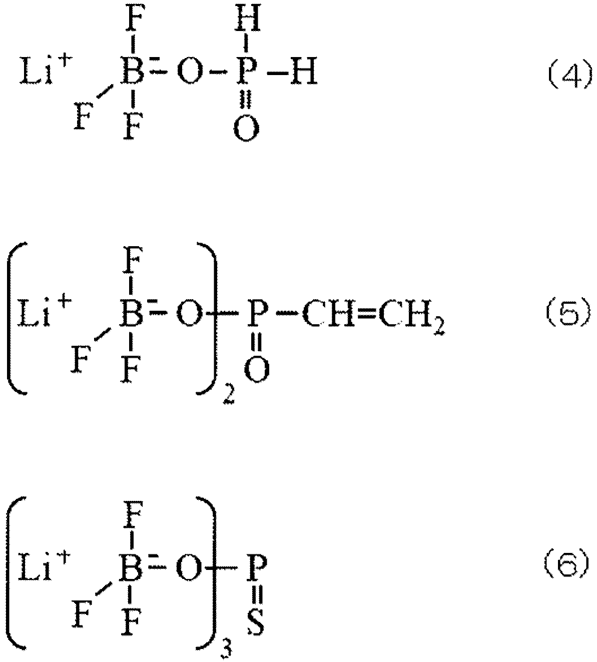

### [Example 5]

9.4 g of lithium tetrafluoroborate as the boron halide-based salt (E) was dissolved in 100 ml of ethyl methyl carbonate in an Erlenmeyer flask in a nitrogen atmosphere, followed by cooling, to thereby obtain a lithium tetrafluoroborate/ethyl methyl carbonate solution.

Then, 25.2 g of bis(trimethylsilyl) vinylphosphonate as the phosphorus compound (F) was added to the lithium tetrafluoroborate/ethyl methyl carbonate solution obtained above under stirring. While the temperature of 80°C was maintained, stirring was performed for 3 hours.

Then, ethyl methyl carbonate was removed using an evaporator, and the resultant was washed with dibutyl ether three times, followed by drying under reduced pressure, to thereby obtain 22g of a complex compound (A5) (lithium (trimethylsilyl) vinylphosphonate·boron trifluoride) represented by the following formula (7).

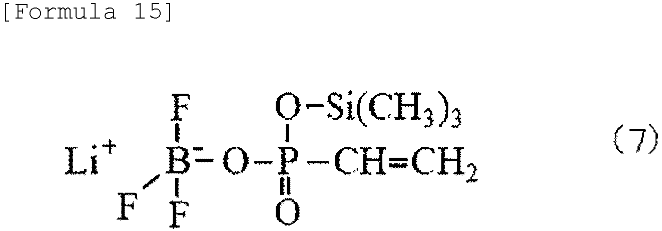

### [Examples 6, 7, and 8]

The boron halide-based salt (E) and the phosphorus compound (F) described in Table 1 were changed to the compounds in amounts described in Table 1, and operation was performed in the same manner as in Example 5 in the amounts under the reaction conditions as described in Table 1, to obtain 28g of a complex compound (A6) (lithium bis(trimethylsilyl)phosphate·boron trifluoride) represented by the following formula (8), 15 g of a complex compound (A7) (lithium(trimethylsilyl)monothiophosphate·bis(boron trifluoride)) represented by the following formula (9), and 43 g of a complex compound (A8) (lithium diphosphate·bis(boron trifluoride)) represented by the following formula (10).

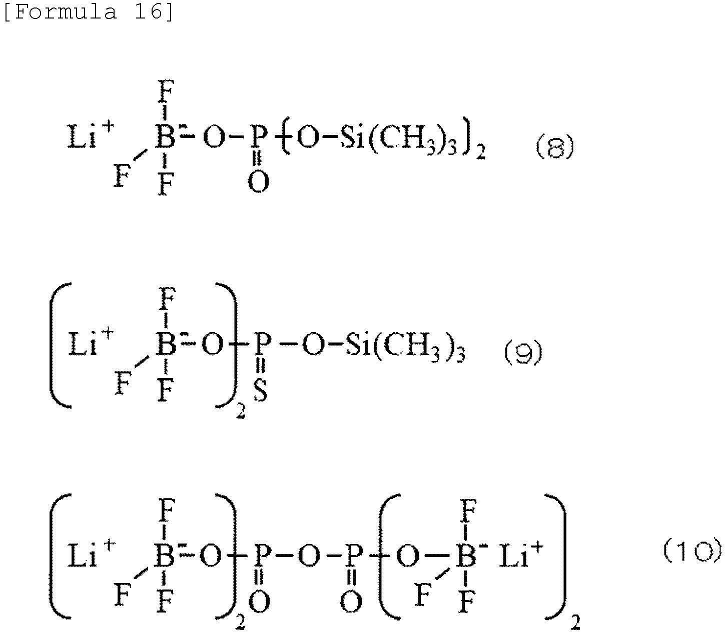

**[Table 1]**

| | Item | | Unit | Example | | | | | | | |
|---|---|---|---|---|---|---|---|---|---|---|---|
| | | | | 1 | 2 | 3 | 4 | 5 | 6 | 7 | 8 |
| | Boron halide compound (B) | BF₃/methanol complex solution | g | 99 | 99 | 99 | 99 | | | | |
| | Phosphorous salt (C) | Lithium dimethyl phosphinate | g | 75 | | | | | | | |
| | | \| Lithium phosphinate | g | | 54 | | | | | | |
| | | Lithium vinyl phosphonate | g | | | 45 | | | | | |
| Mass ratio | | Lithium monothiophosphate | g | | | | 33 | | | | |
| | Boron halide-based salt (E) | Lithium tetrafluoroborate | g | | | | | 9.4 | 9.4 | 9.4 | 37.6 |
| | Phosphorus compound (F) | Bis(trimethylsilyl) vinylphosphonate | g | | | | | 23.6 | | | |
| | | Tris(trimethylsilyl) phosphate | g | | | | | | 31.4 | | |
| | | Tris(trimethylsilyl) diphosphate | g | | | | | | | | 46.6 |

| | | Tris(trimethylsilyl) thiophosphate | g | | | | | | | 16.5 | |
|---|---|---|---|---|---|---|---|---|---|---|---|
| Molar ratio | Boron of (B)/phosphorus of (C) | | - | 1.0 | 1.0 | 2.0 | 3.0 | - | - | - | - |
| | Boron of (E)/silyl group of (F) | | - | - | - | - | - | 0.5 | 0.3 | 0.7 | 1.0 |
| Reaction conditions | Temperature | | °C | 25 | 25 | 25 | 25 | 80 | 80 | 60 | 60 |
| | Time | | hr | 3 | 3 | 3 | 3 | 3 | 3 | 3 | 3 |
| Yield of compound represented by Formula (1) | | | g | 115 | 98 | 86 | 75 | 22 | 28 | 15 | 43 |

### <Synthesis 2 of complex compound (A)>

Various complex compounds (A) were synthesized and evaluated as described below.

### [Example 9]

### (Step 1)

16.8 g of a lithium dimethylphosphinate·boron trifluoride complex salt as the boron halide-based salt (E) was dissolved in 100 ml of ethyl methyl carbonate in an Erlenmeyer flask in a nitrogen atmosphere.

While the solution was stirred, 31.4 g of tris(trimethylsilyl) phosphate as the phosphorus compound (F) was added thereto, and the temperature was maintained at 60°C for two hours under stirring, to obtain a reaction liquid.

### (Step 2)

On the other hand, 18.8 g of lithium tetrafluoroborate as the boron halide-based salt (E) was dissolved in 100 ml of ethyl methyl carbonate, this was added to the reaction liquid obtained in Step 1, and the temperature was maintained at 80°C for two hours under stirring, to obtain a reaction liquid.

### (Concentration)

Then, ethyl methyl carbonate was removed using an evaporator, and the resultant was washed with dibutyl ether three times, followed by drying under reduced pressure, to thereby obtain 35 g of a complex compound (A9) (lithium phosphate·bis(boron trifluoride) /lithium dimethylphosphinate·boron trifluoride condensed salt) represented by the following formula (11).

The specifications of the production are presented in the following Table 3.

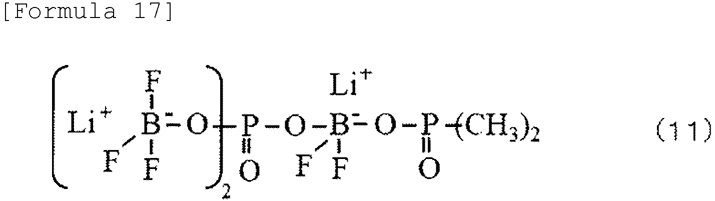

### [Example 10]

### (Step 1)

9.4 g of lithium tetrafluoroborate as the boron halide-based salt (E) was dissolved in 100 ml of ethyl methyl carbonate in an Erlenmeyer flask in a nitrogen atmosphere.

While the solution was stirred, 62.8 g of tris(trimethylsilyl) phosphate as the phosphorus compound (F) was added thereto, and the temperature was maintained at 80°C for three hours under stirring, to obtain a reaction liquid.

### (Step 2)

18.8 g of lithium tetrafluoroborate as the boron halide-based salt (E) was dissolved in 100 ml of ethyl methyl carbonate, the obtained solution was added to the reaction liquid obtained in Step 1, and the temperature was maintained at 80°C for two hours under stirring, to obtain a reaction liquid.

### (Concentration)

Then, a part of ethyl methyl carbonate was removed using an evaporator, to thereby obtain a 30 mass% solution of a complex compound (A10) (lithium (trimethylsilyl) phosphate·boron trifluoride condensed salt) represented by the following formula (12) in ethyl methyl carbonate. The yield was 175 g.

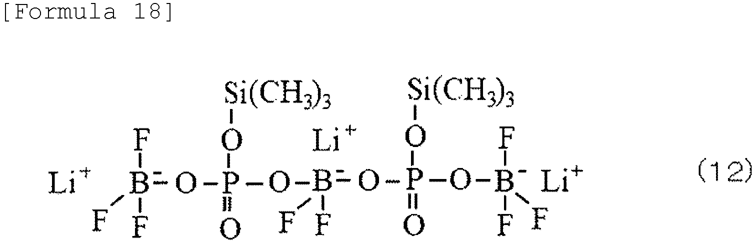

### [Example 11]

The operation was performed in the same manner as in Example 9 except that the boron halide-based salt (E) in the amount described in Table 2 was used in Step 1 and that the phosphorus compound (F) described in Table 2 was used instead of the boron halide-based salt (E) in Step 2, to thereby obtain a 30 mass% solution of a complex compound (A11) (lithium phosphate·tris(boron trifluoride)/bis(trimethylsilyl) phosphate condensed salt) represented by the following formula (13) in ethyl methyl carbonate. The yield was 220 g.

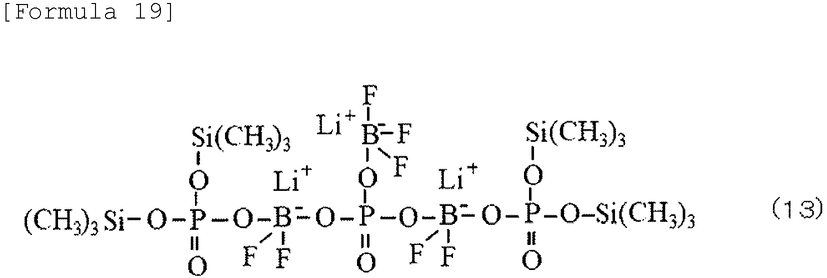

### [Example 12]

18.8 g of lithium tetrafluoroborate as the boron halide-based salt (E) was dissolved in 100 ml of ethyl methyl carbonate in an Erlenmeyer flask in a nitrogen atmosphere.

While the solution was stirred, 31.4 g of tris(trimethylsilyl) phosphate as the phosphorus compound (F) was added thereto, and the temperature was maintained at 50°C for an hour under stirring, to obtain a reaction liquid.

### (Step 2)

On the other hand, 16.6 g of a lithium oxide·bis(boron trifluoride) salt as the boron halide-based salt (E) was dissolved in 100 ml of ethyl methyl carbonate. A portion of this was added to the reaction liquid obtained in Step 1 under normal pressure, and the resultant was allowed to react under reduced pressure. This procedure was repeated several times so that the total amount was added to cause the reaction under reduced pressure. Then, the temperature was maintained at 50°C under stirring for two hours, and the temperature was further maintained at 80°C under stirring for three hours, to obtain a reaction liquid.

### (Concentration)

Then, ethyl methyl carbonate was removed using an evaporator, and the resultant was washed with dibutyl ether three times, followed by drying under reduced pressure, to thereby obtain 38 g of a complex compound (A12) (lithium phosphate·bis(boron trifluoride)/lithium oxide·bis(boron trifluoride) condensed salt) represented by the following formula (14).

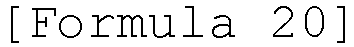

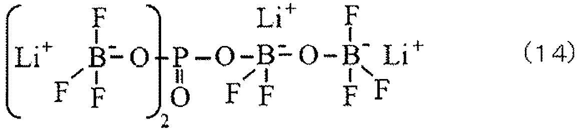

### [Example 13]

The operation was performed in the same manner as in Example 11 except that the lithium tetrafluoroborate in the amount described in Table 2 was used in Step 1 and that the lithium oxide·bis(boron trifluoride) salt was used in the amount described in Table 2 as the boron halide-based salt (E) instead of the phosphorus compound (F) in Step 2, to thereby obtain 38 g of a complex compound (A13) (lithium phosphate·boron trifluoride/lithium oxide·bis(boron trifluoride) condensed salt) represented by the following formula (15).

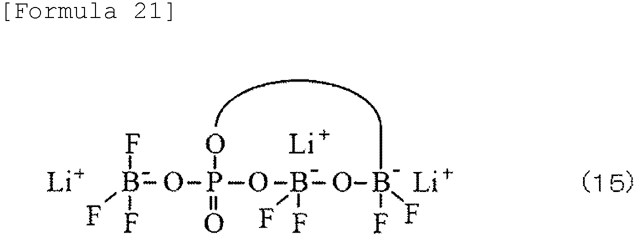

**[Table 2]**

| | Item | | | | unit | Example | | | | | |
|---|---|---|---|---|---|---|---|---|---|---|---|
| | | | | | | 9 | 10 | 11 | 12 | 13 | 14 |
| Mass ratio | Step 1 | Boron halide-based salt (E) | Lithium tetrafluoroborate | | g | | 9.4 | 28.2 | 18.8 | 9.4 | |
| | | | Lithium dimethylphosphinate·boron trifluoride complex salt | | g | 16.8 | | | | | |
| | | | Lithium vinyl phosphonate·bis(boron trifluoride) | | | g | | | | | |
| | | Phosphorus compound (F) | Tris(trimethylsilyl) phosphate | | | g | 31.4 | 62.8 | 31.4 | 31.4 | 31.4 |
| | Step 2 | Boron halide-based salt (E) | Lithium tetrafluoroborate | | | g | 18.8 | 18.8 | | | |
| | | | Lithium oxide·bis(boron trifluoride) salt | | | g | | | | 16.6 | 17.6 |
| | | Phosphorus compound (F) | Tris(trimethylsilyl) phosphate | | | g | | | 62.8 | | |
| Molar ratio | Step 1 | Boron of (E)/silyl group of (F) | | | - | 0.3 | 0.2 | 1.0 | 0.7 | 0.3 | 0.7 |
| | Step 2 | {Boron of (E)+silyl group of (F)} of Step 2 /silyl group of (F) of Step 1 | | | - | 0.7 | 0.3 | 2.0 | 0.6 | 0.7 | 0.3 |
| | Whole steps | Boron of (E)/silyl group of (F) | | | - | 1.0 | 0.5 | 0.3 | 1.3 | 1.0 | 1.0 |
| React ion condit ions | Step 1 | Reaction conditions | Temperature | | °C | 60 | 80 | 80 | 50 | 50 | 50 |
| | | | Time | | hr | 2 | 3 | 3 | 1 | 1 | 1 |
| | | | Cooling | | °C | No | 25 | 25 | No | No | No |
| | Step 2 | Reaction conditions | Reduction of pressure | | - | No | No | No | Yes | Yes | Yes |
| | | | 1 | Temperature | °C | 80 | 60 | 60 | 50 | 50 | 50 |
| | | | | Time | hr | 2 | 2 | 2 | 2 | 2 | 2 |
| | | | 2 | Temperature | °C | - | - | - | 80 | 80 | 80 |
| | | | | Time | hr | - | - | - | 3 | 3 | 3 |
| Yield of compound represented by Formula (1) | | | | | g | 35 | 53 | 66 | 38 | 38 | 35 |

### [Example 14]

25.6 g of a complex compound 3 [lithium vinyl phosphonate·bis(boron trifluoride)] as the boron halide-based salt (E) was dissolved in 100 ml of ethyl methyl carbonate in an Erlenmeyer flask in a nitrogen atmosphere.

While the solution was stirred, 31.4 g of tris(trimethylsilyl) phosphate as the phosphorus compound (F) was added thereto, and the temperature was maintained at 80°C for two hours under stirring, to obtain a reaction liquid.

### (Step 2)

On the other hand, 9.4 g of lithium tetrafluoroborate as the boron halide-based salt (E) was dissolved in 100 ml of ethyl methyl carbonate. This was added in portions to the reaction liquid obtained in Step 1, and the resultant was allowed to react under reduced pressure. Then, while the temperature was maintained at 50°C, stirring was performed for two hours. Furthermore, while the temperature was maintained at 80°C, stirring was performed for three hours, to obtain a reaction liquid.

### (Concentration)

Then, ethyl methyl carbonate was removed using an evaporator, and the resultant was washed with dibutyl ether three times, followed by drying under reduced pressure, to thereby obtain 35 g of a complex compound (A14) (lithium phosphate·boron trifluoride/ vinylphosphone lithium oxide·bis(boron trifluoride) condensed salt) represented by the following formula (16).

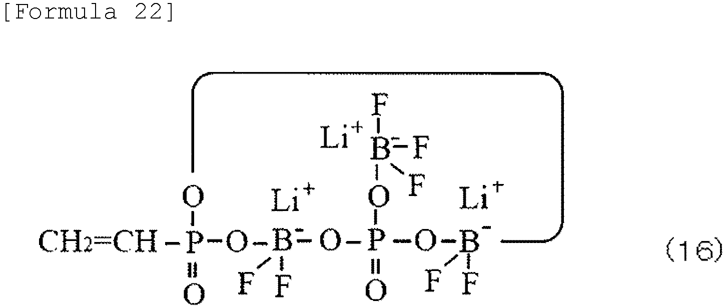

### <<Experiment 2: Evaluation of complex compound (A) as electrolyte>>

### <System uncombined with another electrolyte>

### [Example 15]

### (Preparation of electrolytic solution)

A mixture solvent of ethylene carbonate (EC) and ethyl methyl carbonate (EMC) (volume ratio = 30:70) and the complex compound (A1) obtained above were mixed at the following mass ratio and were homogeneously dissolved so that the concentration of lithium cations derived from the complex compound (A1) was 1.5 mol/L, to thereby prepare an electrolytic solution.
Complex compound (A1): 20.8 parts by mass
Mixture solvent: 79.2 parts by mass

Since the volume of the obtained electrolytic solution was 0.0825 L, the mass concentration of the electrolyte (complex compound (A1)) in the electrolytic solution is calculated as described below.
Mass concentration: 20.8/0.0825=252 g/L

The complex compound (A1) is represented by the following formula (3), has a molecular weight of 167.8, and generates one lithium cation from one molecule. Therefore, the molar concentration of lithium cations derived from the complex compound (A1) is calculated as described below.

Molar concentration of lithium cations derived from complex compound (A1): (20.8/167.8×1)/0.0825 = 1.5 mol/L

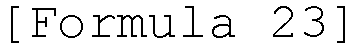

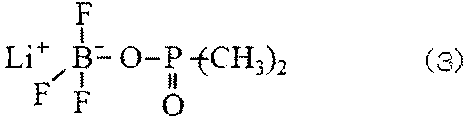

### [Production and evaluation of power storage device]

The electrolytic solution obtained above was used to produce a lithium-ion secondary battery as described above, and the initial charge-discharge efficiency and the resistance value at -10°C were evaluated.

The specifications of the production and the evaluation results are presented in the following Table 3.

### [Examples 16 to 19 and Comparative Example 1]

The operation was performed in the same manner as in Example 15 except that the complex compound (A1) was changed to the complex compound in the amount in parts by mass described in Table 3, and the evaluation was performed in the same manner.

**[Table 3]**

| | Item | | Unit | Example | | | | | Comparative Example |
|---|---|---|---|---|---|---|---|---|---|
| | | | | 15 | 16 | 17 | 18 | 19 | 1 |
| | Composition ratio | Complex compound (A1) | Parts by mass | 20.8 | | | | | |
| | | Complex compound (A3) | Parts by mass | | 15.8 | | | | |
| | | Complex compound (A4) | Parts by mass | | | 13.8 | | | |
| | | Complex compound (A8) | Parts by mass | | | | 30.6 | | |
| | | Complex compound (A11) | Parts by mass | | | | | 19. 1 | |
| | | LiPF₆ | Parts by mass | | | | | | 18.8 |
| | | Solvent (volume ratio EC/EMC=30/70) | Parts by mass | 79.2 | 84.2 | 86.2 | 69.4 | 80.9 | 81.2 |
| | | Total | Parts by mass | 100 | 100 | 100 | 100 | 100 | 100 |
| | Volume of electrolytic solution | | L | 0.0825 | 0.0823 | 0.0821 | 0.0825 | 0.0823 | 0.0825 |
| | Number of Li⁺ generated from one molecule of complex compound | | Number | 1 | 2 | 3 | 4 | 3 | 1 |
| | Electrolyte mass concentration | Complex compound (A1) | g/L | 252 | | | | | |
| Electrolytic solution | | Complex compound (A3) | g/L | | 192 | | | | |
| | | Complex compound (A4) | g/L | | | 168 | | | |
| | | Complex compound (A8) | g/L | | | | 371 | | |
| | | Complex compound (A11) | g/L | | | | | 232 | |
| | | Derived from LiPF₆ | g/L | | | | | | 228 |
| | | Total | g/L | 252 | 192 | 168 | 371 | 232 | 228 |
| | Lithium cation molar concentration | Derived from complex compound (A1) | mol/L | 1.5 | | | | | |
| | | Derived from complex compound (A3) | mol/L | | 1.5 | | | | |
| | | Derived from complex compound (A4) | mol/L | | | 1.5 | | | |
| | | Derived from complex compound (A8) | mol/L | | | | 1.5 | | |
| | | Derived from complex compound (A11) | mol/L | | | | | 1.5 | |
| | | Derived from LiPF₆ | mol/L | | | | | | 1.5 |
| | | Total | mol/L | 1.50 | 1.5 | 1.5 | 1.5 | 1.5 | 1.5 |
| Evaluation results | Initial charge-discharge efficiency | | % | 84.2 | 85.2 | 85.4 | 84.9 | 85.3 | 85.1 |
| | Resistance value at -10°C | | mΩ | 1480 | 1460 | 1410 | 1420 | 1390 | 1450 |

### <System combined with another electrolyte>

### [Example 20]

### (Preparation of electrolytic solution)

A mixture solvent of ethylene carbonate (EC) and ethyl methyl carbonate (EMC) (volume ratio = 30:70), the complex compound (A3) obtained above, and LiPF₆ were mixed at the following mass ratio and were homogeneously dissolved so that the concentration of lithium cations derived from the complex compound (A3) was 0.75 mol/L and the concentration of lithium cations derived from LiPF₆ was 0.75 mol/L, to thereby prepare an electrolytic solution.
Complex compound (A3): 10.4 parts by mass
LiPF₆: 9.4 parts by mass
Mixture solvent: 80.2 parts by mass

Since the volume of the obtained electrolytic solution was 0.0825 L, the mass concentration of each electrolyte in the electrolytic solution is calculated as described below.
Mass concentration of complex compound (A3): 10.4/0.0825=126 g/L
Mass concentration of LiPF₆: 9.4/0.0825=114 g/L

The complex compound (A3) is represented by the following formula (5), has a molecular weight of 336, and generates two lithium cations from one molecule. Therefore, the molar concentration of lithium cations derived from the complex compound (A3) is calculated as described below.

Molar concentration of lithium cations derived from complex compound (A3): (10.4/336×2)/0.0825 = 0.75 mol/L

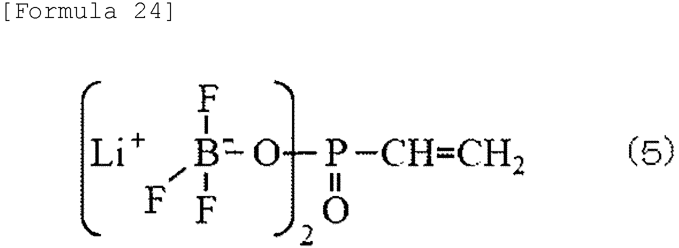

Similarly, LiPF₆ has a molecular weight of 152 and generates one lithium cation from one molecule. Therefore, the molar concentration of the lithium cations derived from LiPF₆ in the electrolytic solution is calculated as described below.
Molar concentration of lithium cations derived from LiPF₆: (9.4/152×1)/0.0825=0.75 mol/L

### (Production and evaluation of power storage device)

The electrolytic solution obtained above was used to produce a lithium-ion secondary battery as described above, and the initial charge-discharge efficiency and the resistance value at -10°C obtained after storage at an initial stage and at 80°C for 10 hours were evaluated.

The specifications of the production and the evaluation results are presented in the following Table 4.

### [Examples 21 to 24 and Comparative Example 2]

The operation was performed in the same manner as in Example 20 except that the complex compound (A3) was changed to the complex compound in the amount in parts by mass described in Table 4, and the evaluation was performed in the same manner.

**[Table 4]**

| | Item | | Unit | Example | | | | | Comparative Example |
|---|---|---|---|---|---|---|---|---|---|
| | | | | 20 | 21 | 22 | 23 | 24 | 2 |
| | Composition ratio | Complex compound (A3) | Parts by mass | 10.4 | | | | | |
| | | Complex compound (A5) | Parts by mass | | 7.9 | | | | |
| | | Complex compound (A7) | Parts by mass | | | 6.9 | | | |
| | | Complex compound (A9) | Parts by mass | | | | 15.3 | | |
| | | Complex compound (A10) | Parts by mass | | | | | 9.6 | |
| | | LiPF₆ | Parts by mass | 9.4 | 9.4 | 9.4 | 9.4 | 9.4 | 9.4 |
| | | Solvent (volume ratio EC/EMC=30/70) | Parts by mass | 80.2 | 82.7 | 83.7 | 75.3 | 81 | 90.6 |
| | | Total | Parts by mass | 100 | 100 | 100 | 100 | 100 | 100 |
| | Volume of electrolytic solution | | L | 0.0825 | 0.0823 | 0.0821 | 0.0827 | 0.0828 | 0.0825 |
| | Number of Li⁺ generated from one molecule of complex compound (A) | | Number | 2 | 1 | 2 | 3 | 3 | - |
| Electrolytic solution | Number of Li⁺ generated from one molecule of LiPF₆ | | Number | 1 | 1 | 1 | 1 | 1 | 1 |
| | Electrolyte mass concentration | Complex compound (A3) | g/L | 126 | | | | | |
| | | Complex compound (A5) | g/L | | 96 | | | | |
| | | Complex compound (A7) | g/L | | | 84 | | | |
| | | Complex compound (A9) | g/L | | | | 185 | | |
| | | Complex compound (A10) | g/L | | | | | 116 | |
| | | LiPF₆ | g/L | 114 | 114 | 114 | 114 | 114 | 114 |
| | | Total | g/L | 240 | 210 | 198 | 299 | 230 | 114 |
| | Lithium cation molar concentration | Derived from complex compound (A3) | mol/L | 0.75 | | | | | |
| | | Derived from complex compound (A5) | mol/L | | 0.75 | | | | |
| | | Derived from complex compound (A7) | mol/L | | | 0.75 | | | |
| | | Derived from complex compound (A9) | mol/L | | | | 0.75 | | |
| | | Derived from complex compound (A10) | mol/L | | | | | 0.75 | |
| | | Derived from LiPF₆ | mol/L | 0.75 | 0.75 | 0.75 | 0.75 | 0.75 | 0.75 |
| | | Total | mol/L | 1.5 | 1.5 | 1.5 | 1.5 | 1.5 | 0.75 |
| Evaluation results | Initial charge-discharge efficiency | | % | 86.1 | 86.4 | 85.9 | 85.7 | 86.7 | 83.6 |
| | Resistance value at -10°C | | mΩ | 1410 | 1350 | 1340 | 1330 | 1320 | 1550 |

### <<Experiment 3: Evaluation of complex compound (A) as reinforcing agent>>

### <System uncombined with another reinforcing agent>

### [Example 25]

### (Preparation of electrolytic solution)

A mixture solvent of ethylene carbonate (EC), ethyl methyl carbonate (EMC), and vinylene carbonate (VC) (volume ratio = 30:68:2), LiPF₆ as an electrolyte, and the complex compound (A2) as a reinforcing agent were mixed at the following mass ratio and were dissolved, to thereby prepare an electrolytic solution.
Mixture solvent: 87.4 parts by mass
LiPF₆: 12.5 parts by mass
Complex compound (A2): 0.1 parts by mass

Since the volume of the obtained electrolytic solution was 0.0827 L, the mass concentration of each electrolyte in the electrolytic solution is calculated as described below.
Mass concentration of LiPF₆: 12.5/0.0827 = 149 g/L
Mass concentration of complex compound (A2): 0.1/0.0827 = 1.2 g/L

The complex compound (A2) is represented by the following formula (4), has a molecular weight of 140, and generates one lithium cation from one molecule. Therefore, the molar concentration of lithium cations derived from the complex compound (A2) in the electrolytic solution is calculated as described below.

Molar concentration of lithium cations derived from complex compound (A2): (0.1/140)×1/0.0827 = 0.01 mol/L

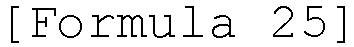

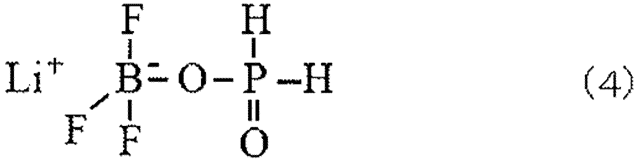

Similarly, LiPF₆ has a molecular weight of 152 and generates one lithium cation from one molecule. Therefore, the molar concentration of the lithium cations derived from LiPF₆ in the electrolytic solution is calculated as described below.
Molar concentration of lithium cations derived from LiPF₆: (12.5/152)×1/0.0827 = 1.0 mol/L

### (Production and evaluation of power storage device)

The electrolytic solution obtained above was used to prepare a lithium-ion secondary battery as described above, and then the volume of the lithium-ion secondary battery in an uncharged state in an atmosphere of 25°C was measured and was used as the initial volume.

Then, it was charged to 4.2 V at a rate of 0.2 C and was allowed to stand in a charged state in an atmosphere of 60°C for 4 weeks. Then, it was discharged to 3.0 V at a rate of 0.2 C in an atmosphere of 25°C, and the volume of the lithium-ion secondary battery was measured similarly in an atmosphere of 25°C and was used as the volume after high-temperature storage.

Then, the change in volume, the capacity retention ratio, and the change in resistance were evaluated.

The specifications of the production and the evaluation results are presented in the following Table 5.

### [Examples 26 to 37 and Comparative Example 3]

The operation was performed in the same manner as in Example 25 except that the amount in parts by mass of LiPF₆ and the kind and amount in parts by mass of the complex compound (A) as the reinforcing agent were changed as described Tables 5 and 6, and the evaluation was performed in the same manner.

**[Table 5]**

| | Item | | | Unit | Example | | | | | | |
|---|---|---|---|---|---|---|---|---|---|---|---|
| | | | | | 25 | 26 | 27 | 28 | 29 | 30 | 31 |
| | | LiPF₆ | | Parts by mass | 12.5 | 12.5 | 12.4 | 12.4 | 12.4 | 12.3 | 12.3 |
| | | Complex compound (A) | Complex compound (A2) | Parts by mass | 0.1 | 0.2 | 0.5 | 1.0 | | | |
| | | | Complex compound (A5) | Parts by mass | | | | | 1.0 | | |
| | | | Complex compound (A6) | Parts by mass | | | | | | 2.0 | |
| | | | Complex compound (A7) | Parts by mass | | | | | | | 2.0 |
| | Composition ratio | | Complex compound (A9) | Parts by mass | | | | | | | |
| | | | Complex compound (A10) | Parts by mass | | | | | | | |
| Electrolytic solution | | | Complex compound (A12) | Parts by mass | | | | | | | |
| | | | Complex compound (A14) | Parts by mass | | | | | | | |
| | | Solvent (volume ratio EC/EMC/VC=30/68/2) | | Parts by mass | 87.4 | 87.3 | 87.1 | 86.6 | 86.6 | 85.7 | 85.7 |
| | | Total | | Parts by mass | 100.0 | 100.0 | 100.0 | 100.0 | 100.0 | 100.0 | 100.0 |
| | Volume of electrolytic solution | | | L | 0.0827 | 0.0827 | 0.0827 | 0.0827 | 0.0827 | 0.0826 | 0.0826 |
| | Number of Li+ generated from one molecule of LiPF₆ | | | Number | 1 | 1 | 1 | 1 | 1 | 1 | 1 |
| | Number of Li⁺ generated from one molecule of complex compound (A) | | | Number | 1 | 1 | 1 | 1 | 1 | 1 | 2 |
| | Electrolyte mass concentration | | LiPF₆ | g/L | 151.1 | 151.1 | 149.9 | 149.9 | 149.9 | 148.9 | 148.9 |
| | | | Complex compound (A2) | g/L | 1.2 | 2.4 | 6.0 | 12.1 | | | |
| | | Complex compound (A5) | g/L | | | | | | 12.1 | | |
| | | Complex compound (A6) | g/L | | | | | | | 24.2 | |
| | | Complex compound (A7) | g/L | | | | | | | | 24.2 |
| | | Complex compound (A9) | g/L | | | | | | | | |
| | | Complex compound (A10) | g/L | | | | | | | | |
| | | Complex compound (A12) | g/L | | | | | | | | |
| | | Complex compound (A14) | g/L | | | | | | | | |
| | | Total | g/L | | 152.3 | 153.5 | 155.9 | 162.0 | 162.0 | 173.1 | 173.1 |
| | | Derived from LiPF₆ | mol/L | | 0.994 | 0.994 | 0.990 | 0.990 | 0.990 | 0.980 | 0.980 |
| | | Derived from complex compound (A2) | mol/L | | 0.01 | 0.02 | 0.04 | 0.07 | | | |
| | | Derived from complex compound (A5) | mol/L | | | | | | 0.04 | | |
| | | Derived from complex compound (A6) | mol/L | | | | | | | 0.07 | |
| | Lithium cation molar concentration | Derived from complex compound (A7) | mol/L | | | | | | | | 0.12 |
| | | Derived from complex compound (A9) | mol/L | | | | | | | | |
| | | Derived from complex compound (A10) | mol/L | | | | | | | | |
| | | Derived from complex compound (A12) | mol/L | | | | | | | | |
| | | Derived from complex compound (A14) | mol/L | | | | | | | | |
| | | Total | mol/L | | 1.00 | 1.01 | 1.03 | 1.06 | 1.03 | 1.05 | 1.10 |
| Evaluation results | Change in volume | | % | | 101.1 | 101.1 | 101.0 | 101.0 | 101.5 | 101.9 | 100.8 |
| | Capacity retention ratio | | % | | 82.4 | 82.3 | 82.7 | 82.9 | 82.3 | 82.0 | 81.9 |
| | Change in resistance | | % | | 93 | 92 | 89 | 89 | 95 | 98 | 92 |

**[Table 6]**

| | Item | | | Unit | Example | | | | | | Comparative Example |
|---|---|---|---|---|---|---|---|---|---|---|---|
| | | | | | 32 | 33 | 34 | 35 | 36 | 37 | 3 |
| Electrolytic solution | | LiPF₆ | | Parts by mass | 12.3 | 11.9 | 12.3 | 12.3 | 12.4 | 12.4 | 12.55 |
| | | Complex compound (A) | Complex compound (A2) | Parts by mass | | | | | | | |
| | | | Complex compound (A5) | Parts by mass | | | | | | | |
| | | | Complex compound (A6) | Parts by mass | | | | | | | |
| | | | Complex compound (A7) | Parts by mass | | | | | | | |
| | Composition ratio | | Complex compound (A9) | Parts by mass | 2.0 | 5.0 | | | | | |
| | | | Complex compound (A10) | Parts by mass | | | 2.0 | | | 1.0 | |
| | | | Complex compound (A12) | Parts by mass | | | | 2.0 | | | |
| | | | Complex compound (A14) | Parts by mass | | | | | 1.0 | | |
| | | Solvent (volume ratio EC/EMCNC=30/68/2) | | Parts by mass | 85.7 | 83.1 | 85.7 | 85.7 | 86.6 | 86.6 | 87.5 |
| | | Total | | Parts by mass | 100.0 | 100.0 | 100.0 | 100.0 | 100.0 | 100.0 | 100.05 |
| | Volume of electrolytic solution | | | L | 0.0826 | 0.0825 | 0.0826 | 0.0826 | 0.0827 | 0.0827 | 0.0827 |
| | Number of Li+ generated from one molecule of LiPF₆ | | | Number | 1 | 1 | 1 | 1 | 1 | 1 | 1 |
| | Number of Li⁺ generated from one molecule of complex compound (A) | | | Number | 3 | 3 | 3 | 4 | 3 | 3 | - |
| | | | LiPF₆ | g/L | 148.9 | 144.2 | 148.9 | 148.9 | 149.9 | 149.9 | 152.0 |
| | Electrolyte mass concentration | Complex compound (A2) | g/L | | | | | | | | |
| | | Complex compound (A5) | g/L | | | | | | | | |
| | | Complex compound (A6) | g/L | | | | | | | | |
| | | Complex compound (A7) | g/L | | | | | | | | |
| | | Complex compound (A9) | g/L | 24.2 | 60.6 | | | | | | |
| | | Complex compound (A10) | g/L | | | 24.2 | | | 12.1 | | |
| | | Complex compound (A12) | g/L | | | | 24.2 | | | | |
| | | Complex compound (A14) | g/L | | | | | 12.1 | | | |
| | | Total | g/L | 173.1 | 204.8 | 173.1 | 173.1 | 162.0 | 162.0 | 152.0 | |
| | Lithium cation molar concentration | Derived from LiPF₆ | mol/L | 0.980 | 0.950 | 0.980 | 0.980 | 0.990 | 0.990 | 1.000 | |
| | | Derived from complex compound (A2) | mol/L | | | | | | | | |
| | | Derived from complex compound (A5) | mol/L | | | | | | | | |
| | | Derived from complex compound (A6) | mol/L | | | | | | | | |
| | | Derived from complex compound (A7) | mol/L | | | | | | | | |
| | | Derived from complex compound (A9) | mol/L | 0.15 | 0.38 | | | | | | |
| | | Derived from complex compound (A10) | mol/L | | | 0.1 | | | 0.1 | | |
| | | Derived from complex compound (A12) | mol/L | | | | 0.2 | | | | |
| | | Derived from complex compound (A14) | mol/L | | | | | 0.1 | | | |
| | | Total | mol/L | 1.13 | 1.33 | 1.08 | 1.18 | 1.09 | 1.09 | 1.00 | |
| Evaluation results | Change in volume | | % | 101.3 | 100.9 | 101.5 | 101.8 | 100.8 | 100.6 | 103.5 | |
| | Capacity retention ratio | | % | 82.6 | 82.8 | 82.1 | 82.2 | 82.7 | 82.9 | 80.5 | |
| | Change in resistance | | % | 93 | 94 | 95 | 97 | 97 | 96 | 107 | |

### <System combined with another reinforcing agent>

### [Example 38]

### (Preparation of electrolytic solution)

A mixture solvent of ethylene carbonate (EC), ethyl methyl carbonate (EMC), and vinylene carbonate (VC) (volume ratio = 30:69:1), LiPF₆ as an electrolyte, the complex compound (A9) as a reinforcing agent, and 1,3-propanesultone were mixed at the following mass ratio and were dissolved, to thereby prepare an electrolytic solution.
Mixture solvent: 85.7 parts by mass
LiPF₆: 12.3 parts by mass
Complex compound (A9): 1.0 part by mass
1,3-Propanesultone: 1.0 part by mass

Since the volume of the obtained electrolytic solution was 0.0827 L, the mass concentration of each electrolyte in the electrolytic solution is calculated as described below.
Mass concentration of LiPF₆: 12.3/0.0827 = 149 g/L
Mass concentration of complex compound (A9): 1.0/0.0827 = 12.1 g/L

The complex compound (A9) is represented by the following formula (11), has a molecular weight of 410, and generates three lithium cations from one molecule. Therefore, the molar concentration of lithium cations derived from the complex compound (A9) in the electrolytic solution is calculated as described below.

Molar concentration of lithium cations derived from complex compound (A9): (1/410)×3/0.0827 = 0.09 mol/L

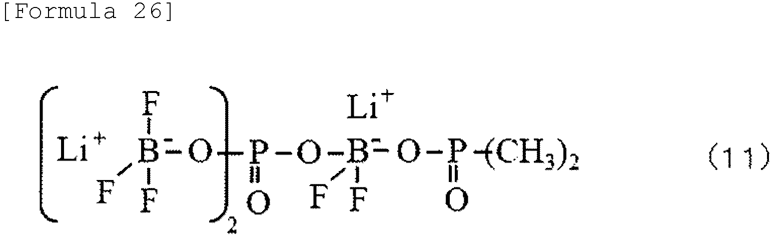

Similarly, LiPF₆ has a molecular weight of 152 and generates one lithium cation from one molecule. Therefore, the molar concentration of the lithium cations derived from LiPF₆ in the electrolytic solution is calculated as described below.
Molar concentration of lithium cations derived from LiPF₆: (12.3/152×1)/0.827 = 0.98 mol/L

### (Production and evaluation of power storage device)

The electrolytic solution obtained above was used to produce a lithium-ion secondary battery, and an initial resistance value was measured in an atmosphere of 25°C.

First, the lithium-ion secondary battery was charged to 4.2 V at a rate of 1 C in an atmosphere of 45°C, and then was discharged to 3.0 V at a rate of 1 C to measure the discharge capacity. This first discharge capacity was considered as an initial capacity.

Then, the lithium-ion secondary battery was similarly charged and discharged between 3.0 V and 4.2 V. This operation was repeated 200 times, to measure the discharge capacity and to calculate a capacity retention ratio after 200 cycles.

The resistance value was measured in an atmosphere of 25°C, and a change in resistance after 200 cycles was calculated.

The specifications of the production and the evaluation results are presented in the following Table 7.

### [Examples 39 to 41 and Comparative Example 4]

The operation was performed in the same manner as in Example 38 except that the reinforcing agent was changed to the compound in the amount in parts by mass described in Table 7, and the evaluation was performed in the same manner.

**[Table 7]**

| | Item | | | Unit | Example | | | | Comparative Example |
|---|---|---|---|---|---|---|---|---|---|
| | | | | | 38 | 39 | 40 | 41 | 4 |
| | Composition ratio | LiPF₆ | | Parts by mass | 12.3 | 12.3 | 12.2 | 12.3 | 12.6 |
| | | Reinforcing agent | Complex compound (A9) | Parts by mass | 1.0 | 1.0 | 1.0 | 1.0 | |
| | | | 1, 3-Propane sultone | Parts by mass | 1.0 | | | | |
| | | | Hexadiisocyanate | Parts by mass | | 0.5 | | | |
| | | | Tris(trimethylsilyl)borate | Parts by mass | | | 1.5 | | |
| | | | Maleic anhydride | Parts by mass | | | | 0.5 | |
| | | Solvent (volume ratio EC/EMC/VC= 30/69/1) | | Parts by mass | 85.7 | 86.2 | 85.3 | 86.2 | 87.4 |
| Electrolytic solution | | Total | | Parts by mass | 100.0 | 100.0 | 100.0 | 100.0 | 100.0 |
| | Volume of electrolytic solution | | | L | 0.0827 | 0.0827 | 0.0826 | 0.0827 | 0.0827 |
| | Number of Li+ generated from one molecule of LiPF₆ | | | Number | 1 | 1 | 1 | 1 | 1 |
| | Number of Li⁺ generated from one molecule of reinforcing agent | | Complex compound (A9) | Number | 3 | 3 | 3 | 3 | - |
| | Electrolyte mass concentration | | LiPF₆ | g/L | 148.7 | 148.7 | 147.7 | 148.7 | 152.0 |
| | | | Complex compound (A9) | g/L | 12.1 | 12.1 | 12.1 | 12.1 | - |
| | | | Total | | 160.8 | 160.8 | 159.8 | 160.8 | 152.0 |
| | Lithium cation molar concentration | | Derived from LiPF₆ | mol/L | 0.98 | 0.98 | 0.97 | 0.98 | 1.00 |
| | | | Derived from complex compound (A9) | mol/L | 0.09 | 0.09 | 0.09 | 0.09 | - |
| | | | Total | mol/L | 1.07 | 1.07 | 1.06 | 1.07 | 1.00 |
| Evaluation results | Capacity retention ratio | | | % | 97.4 | 98.3 | 98.5 | 97.8 | 93 |
| | Change in resistance | | | % | 134 | 137 | 135 | 132 | 155 |

### <Summary of results>

The electrolyte, the reinforcing agent, and the electrolytic solution of the present invention, and the power storage device produced by using them in Examples exhibited excellent in solubility to an organic solvent (nonaqueous solvent), and that can provide a power storage device being excellent in charge-discharge efficiency, a resistance value at -10 C, cycle characteristics (change in volume, capacity retention ratio, change in resistance) and balance of high-temperature characteristics

On the other hand, Comparative Examples showed poor result in any of the solubility to an organic solvent (nonaqueous solvent), the charge-discharge efficiency, the resistance value at -10°C, the cycle characteristics (change in volume, capacity retention ratio, change in resistance), and the high-temperature characteristics was deteriorated.

## Claims

1. An electrolyte for power storage device, comprising a complex compound (A),
wherein the complex compound (A) comprises one or more compounds represented by Formula (1) below: 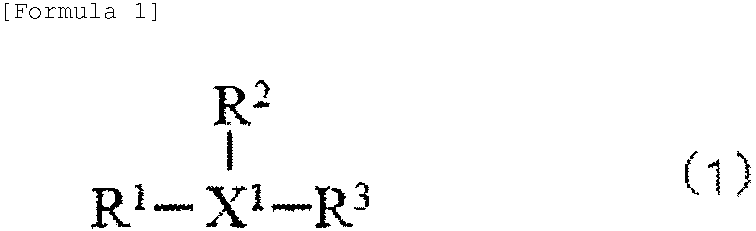
wherein X¹ is a P(=O) group or a P(=S) group,
R¹ to R³ are each independently a group selected from the group consisting of a hydrogen atom, an alkyl group, an alkenyl group, a halogen atom, an alkoxy group, a siloxy group, a thiosilane group, and a group represented by Formula (2) below; or one of two groups selected from the group consisting of R¹ to R³ is an oxygen atom and is linked to the other group to form a ring structure, and
at least one of R¹ to R³ is a group containing a structure represented by Formula (2) below: 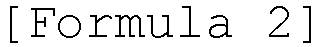 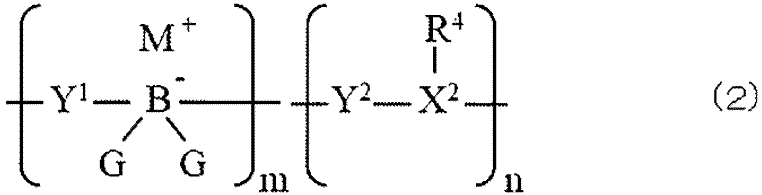
wherein the Formula (2) represents an oligomer having a molecular structure that includes a structure in which respective repeating units represented in brackets are linked to each other, and a linkage order of the repeating units is arbitrary,
m represents a repeating number of the repeating unit put in [ ]ₘ, and is a number of 1 to 10,
n represents a repeating number of the repeating unit put in [ ]ₙ, and is a number of 0 to 10,
M⁺ is an alkali metal cation or a quaternary ammonium cation,
Y¹ and Y² are each independently an oxygen atom or a sulfur atom,
B is a boron atom,
G is a halogen atom,
X² is a P(=O) group or a P(=S) group, and
R⁴ is each independently a group selected from the group consisting of a hydrogen atom, an alkyl group, an alkenyl group, a halogen atom, an alkoxy group, a siloxy group, a thiosilane group, and the group put in [ ]ₘ.

2. The electrolyte according to claim 1, wherein the complex compound (A) includes one or more boron halide groups.

3. The electrolyte according to claim 1, wherein the complex compound (A) includes one or more siloxy groups and/or thiosilane groups.

4. The electrolyte according to claim 1, wherein the complex compound (A) includes:
one or more boron halide groups; and
one or more siloxy groups and/or thiosilane groups.

5. The electrolyte according to claim 1,
wherein the complex compound (A) includes one or more selected from the group consisting of complex compounds represented by Formulas (3) to (16) below.

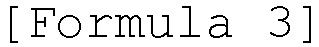

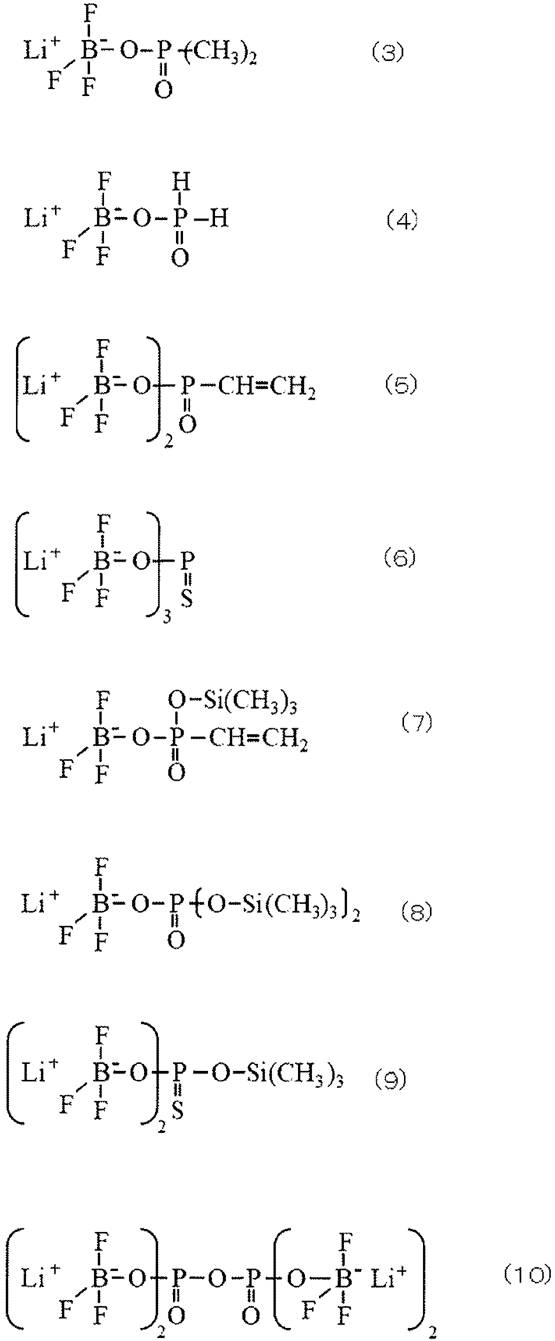

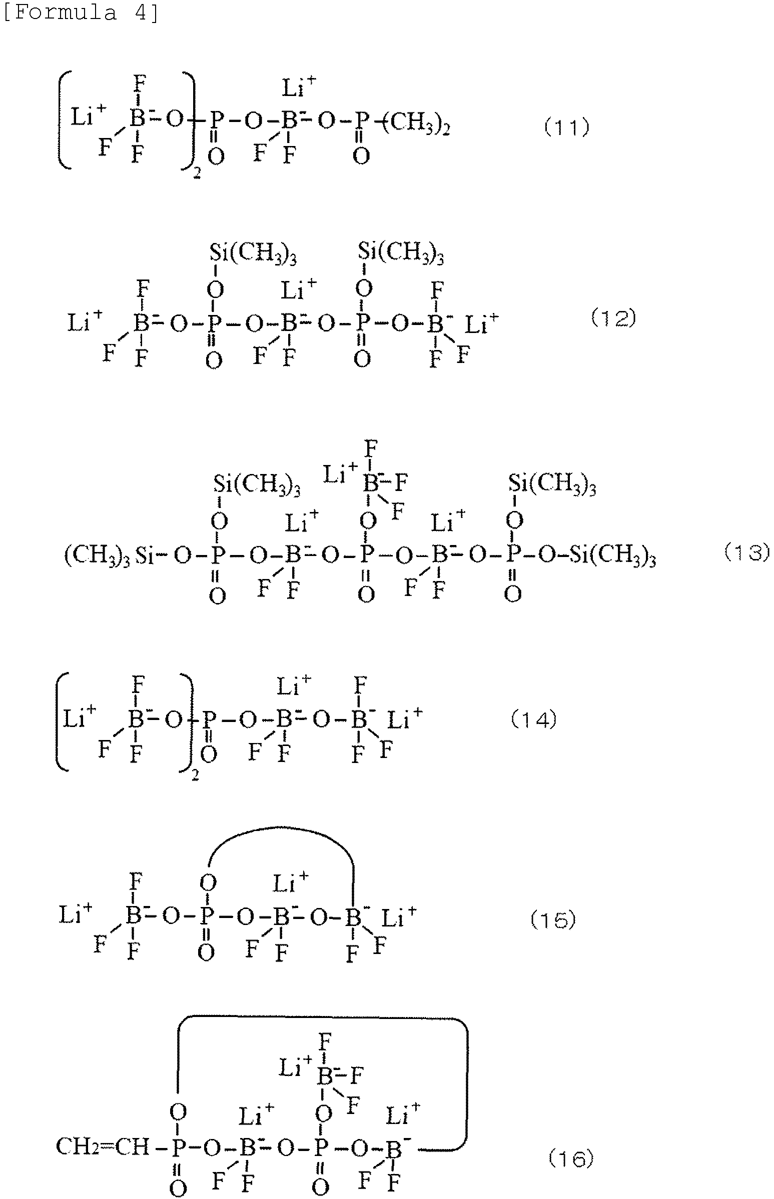

6. A reinforcing agent for power storage device, comprising the complex compound (A) defined in any one of claims 1 to 5.

7. An electrolytic solution for power storage device, comprising at least:
the complex compound (A) defined in any one of claims 1 to 5; and
an organic solvent,
wherein a concentration of an alkali metal cation or a quaternary ammonium cation derived from the complex compound (A) in the whole electrolytic solution is 0.01 mol/L or more and 2.0 mol/L or less.

8. An electrolytic solution for power storage device, comprising at least:
the complex compound (A) defined in any one of claims 1 to 5; and
an organic solvent,
wherein a concentration of the complex compound (A) in the whole electrolytic solution is 0.1% by mass or more and 30% by mass or less.

9. A power storage device produced by using the electrolytic solution according to claim 7 or 8.

10. A power storage device produced by using the electrolyte according to any one of claims 1 to 5 and/or the reinforcing agent according to claim 6.

11. A solid-type power storage device produced by using the electrolyte according to any one of claims 1 to 5 and/or the reinforcing agent according to claim 6.

12. A method for producing the complex compound (A) defined in any one of claims 1 to 5, comprising
reacting a boron halide compound (B) with a phosphorous salt (C) to synthesize a complex compound (A),
wherein the boron halide compound (B) is a compound containing a boron halide group, and
the phosphorous salt (C) is a compound represented by Formula (17) below: 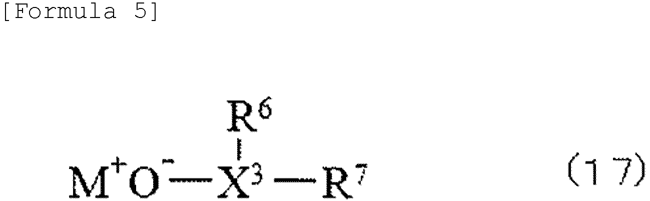
wherein M⁺ is an alkali metal cation or a quaternary ammonium cation, X³ is a P(=O) group or a P(=S) group, and R⁶ and R⁷ are each independently a group selected from the group consisting of a hydrogen atom, a hydroxyl group, an alkyl group, an alkenyl group, an alkoxy group, a siloxy group, a thiosilane group, -O⁻M⁺, and -S⁻M⁺.

13. A method for producing the complex compound (A) defined in any one of claims 1 to 5, comprising:
a step 1 of allowing binding reaction between a boron halide-based salt (E) and a phosphorus compound (F) by elimination of halogenated silyl to proceed,
wherein the boron halide-based salt (E) is a salt composed of an anion having two or more halogen atoms connected to boron and an alkali metal cation or a quaternary ammonium cation, and
the phosphorus compound (F) is a compound represented by Formula (18) below: 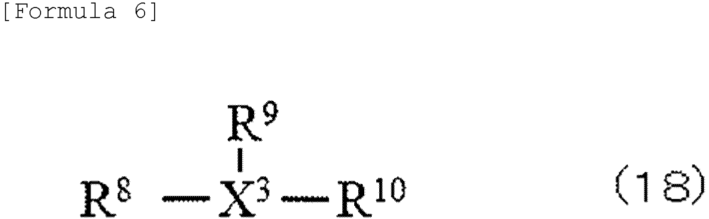
wherein X³ is a P(=O) group or a P(=S) group, R⁸, R⁹, and R¹⁰ are each independently a group selected from the group consisting of a hydrogen atom, a hydroxyl group, an alkyl group, an alkenyl group, an alkoxy group, a siloxy group, and a thiosilane group, and at least one of R⁸, R⁹, and R¹⁰ is a siloxy group or a thiosilane group.

14. The method according to claim 13, further comprising, after the step 1:
a step 2 of adding an additional reactant containing the boron halide-based salt (E) and/or the phosphorus compound (F) to allow the binding reaction by the elimination of halogenated silyl to proceed,
wherein the step 2 is carried out once or more.
